(19) Europäisches Patentamt
European Patent Office
Office européen des brevets

(11) **EP 1 870 813 B1**

## (12) EUROPEAN PATENT SPECIFICATION

(45) Date of publication and mention
of the grant of the patent:
**30.01.2013 Bulletin 2013/05**

(51) Int Cl.:
***G06F 12/12*** *(2006.01)*

(21) Application number: **06291006.2**

(22) Date of filing: **19.06.2006**

(54) **Page processing circuits, devices, methods and systems for secure demand paging and other operations**

Seitenverarbeitende Schaltkreise, Vorrichtungen, Verfahren und Systeme für sicheren, nachfragebasierten Seitenabruf und andere Tätigkeiten

Circuits, dispositifs, procédés et systèmes de traitement de pages pour pagination sécurisé et d'autres opérations

(84) Designated Contracting States:
**DE FR GB NL**

(43) Date of publication of application:
**26.12.2007 Bulletin 2007/52**

(73) Proprietor: **TEXAS INSTRUMENTS FRANCE**
**06271 Villeneuve Loubet Cedex,**
**Nice (FR)**

(72) Inventors:
• **Goss, Steven Charles c/o Texas Instruments**
**France**
**Antibes 06600 (FR)**

• **Conti, Gregory Remy Philippe**
**Saint Paul 06570 (FR)**

(74) Representative: **Holt, Michael**
**Texas Instruments Limited**
**European Patents Department**
**800 Pavilion Drive**
**Northampton NN4 7YL (GB)**

(56) References cited:
**EP-A- 1 536 307       US-A- 5 224 217**
**US-A- 5 386 546       US-A- 5 537 571**
**US-A- 5 757 919**

**Description**

FIELD OF THE INVENTION

This invention is in the field of electronic computing hardware and software and communications, and is more specifically directed to improved processes, circuits, devices, and systems for page processing and other information and communication processing purposes, and processes of making them. Without limitation, the background is further described in connection with demand paging for communications processing.

BACKGROUND OF THE INVENTION

Wireline and wireless communications, of many types, have gained increasing popularity in recent years. The personal computer with a wireline modem such as DSL (digital subscriber line) modem or cable modem communicates with other computers over networks. The mobile wireless (or "cellular") telephone has become ubiquitous around the world. Mobile telephony has recently begun to communicate video and digital data, and voice over packet (VoP or VoIP), in addition to cellular voice. Wireless modems, for communicating computer data over a wide area network, using mobile wireless telephone channels and techniques are also available.

Wireless data communications in wireless local area networks (WLAN), such as that operating according to the well-known IEEE 802.11 standard, has become popular in a wide range of installations, ranging from home networks to commercial establishments. Short-range wireless data communication according to the "Bluetooth" technology permits computer peripherals to communicate with a personal computer or workstation within the same room. Numerous other wireless technologies exist and are emerging.

Security techniques are used to improve the security of retail and other business commercial transactions in electronic commerce and to improve the security of communications wherever personal and/or commercial privacy is desirable. Security is important in both wireline and wireless communications.

As computer and communications applications with security become larger and more complex, a need has arisen for technology to inexpensively handle large amounts of software program code and the data in a secure manner such as in pages for those applications and not necessarily require substantial amounts of additional expensive on-chip memory for a processor to handle those applications.

Processors of various types, including DSP (digital signal processing) chips, RISC (reduced instruction set computing) and/or other integrated circuit devices are important to these systems and applications. Constraining or reducing the cost of manufacture and providing a variety of circuit and system products with performance features for different market segments are important goals in DSPs, integrated circuits generally and system-on-a-chip (SOC) design.

United States Patent No. 5, 537, 571 describes a control device for a buffer memory which distinguishes information of the "instruction" type and information of the "data" type, and which replaces stored information with current information according to at least replacement algorithm. It comprises partitioning means which make available, for at least one of the said types of information therefore called a limited type, a limited amount of memory, delocalized in the buffer memory, and, when a current information item has to be loaded while the said limited amount has been overloaded by the stored information of limited type, replacement means load it by priority by replacing a stored replaceable information item of limited type.

United States Patent No. 5,224,217 describes a method of implementing the "least-recently-used" (LRU) replacement algorithm in a cache memory. Each data block in the cache memory is numbered with a priority tag ranging from 0 to the number of blocks in the cache memory. The lowest numbered block is always replaced first. The just replaced block is given the highest priority tag and one is subtracted from each other priority tag. When a requested block is found in the cache, one is subtracted from each priority tag greater than the requested priority tag and the requested block is given the highest priority tag.

United States Patent No. 5, 757, 919 describes a method and system for maintaining integrity and confidentiality of pages paged to an external storage unit from a physically secure environment. An outgoing page is selected to be exported from a physically secure environment to an insecure environment. An integrity check value is generated and stored for the outgoing page by taking a one-way hash of the page using a well-known one-way hash function. The outgoing page is then encrypted using a cryptographically strong encryption algorithm. The encrypted outgoing page is then exported to the external storage. By virtue of the encryption and integrity check, the security of the data on the outgoing page is maintained in the insecure environment.

United States Patent No. 5, 386,546 describes a block substitution method of a cache memory including the steps of storing data integrity information with a main memory for each block of the cache memory and calculating a non-reference period of each block. The non-reference periods of the blocks are compared to determine an order of the blocks based on the non-reference periods and a difference between the non-reference period of the block having a longest non-reference period and the non-reference period of other blocks is calculated. Data integrity in the block having the longest non-reference period is examined and when there is no data integrity in that block the data integrity in other blocks is examined in the order of the non-reference period. A block having a longest non-reference period among the blocks having the data integrity is determined and the determined block is selected as a block to be substituted by a new data block when the difference is smaller than a predetermined value. New data is loaded to the selected block.

Further alternative and advantageous solutions would, accordingly, be desirable in the art.

SUMMARY OF THE INVENTION

The invention resides in a page processing circuit, a page processing method and a telecommunications unit as set out in the appended claims

BRIEF DESCRIPTION OF THE DRAWINGS

FIG. 1 is a pictorial diagram of a communications system including system blocks, for example a cellular base station, a WLAN AP (wireless local area network access point), a WLAN gateway, a personal computer, and two cellular telephone handsets, any one, some or all of the foregoing improved according to the invention.

FIG. 2 is a block diagram of inventive integrated circuit chips for use in the blocks of the communications system of FIG. 1.

FIG. 3 is a block diagram of inventive hardware and process blocks for selectively operating one or more of the chips of FIG. 2 for the system blocks of FIG. 1.

FIG. 4 is a partially-block, partially data structure diagram for illustrating an inventive process and circuit for secure demand paging (SDP).

FIG. 5 is a block diagram further illustrating an inventive process and circuit for secure demand paging performing a SwapIn.

FIG. 6 is a block diagram further illustrating an inventive process and circuit for secure demand paging performing a Swap Out.

FIG. 7 is a block diagram further illustrating an inventive process and circuit for secure demand paging with encryption and DMA (direct memory access).

FIG. 8 is a block diagram further illustrating an inventive process and circuit for secure demand paging with a hash.

FIG. 9 is a block diagram of an inventive integrated circuit for inventively advising and selecting which page(s) to wipe in a demand paging process.

FIG. 10 is a block diagram of inventive registers, data structures and operations for inventively advising and selecting which page(s) to wipe in the demand paging process performed by the inventive integrated circuit of FIG. 9.

FIG. 11 is a block diagram of another inventive embodiment of registers, data structures and operations for inventively advising and selecting which page(s) to wipe in the demand paging process performed by the inventive integrated circuit of FIG. 9.

FIGS. 12A and 12B are flow diagrams of inventive process embodiments for data structures and operations for inventively generating statistics, advising and selecting which page(s) to wipe in the demand paging process performed by the inventive integrated circuit of FIG. 9. FIGS. 12A and 12B are two halves of a composite flow.

FIG. 13 is a block diagram of a further inventive embodiment of registers, data structures and operations for inventively advising and selecting which page(s) to wipe in the demand paging process performed by the inventive integrated circuit of FIG. 9.

FIG. 14 is a flow diagram of an inventive of process of manufacture of various embodiments of FIGS. 1-13.

## DESCRIPTION OF EMBODIMENTS OF THE INVENTION

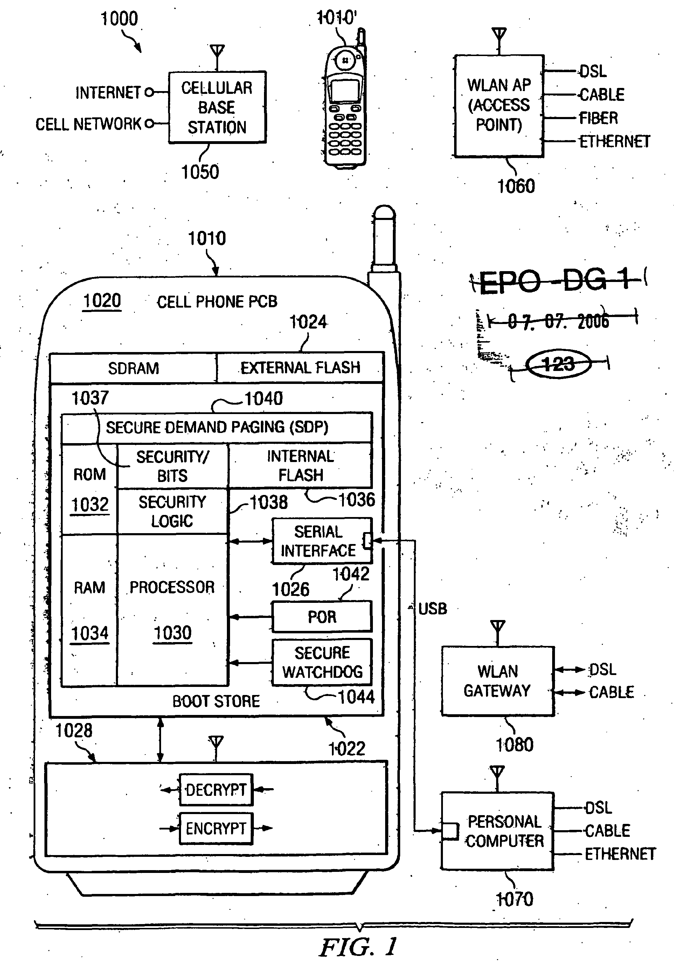

In FIG. 1, an improved communications system 1000 has system blocks as described next. Any or all of the system blocks, such as cellular mobile telephone and data handsets 1010 and 1010', a cellular (telephony and data) base station 1050, a WLAN AP (wireless local area network access point, IEEE 802.11 or otherwise) 1060, a Voice WLAN gateway 1080 with user voice over packet telephone 1085 (not shown), and a voice enabled personal computer (PC) 1070 with another user voice over packet telephone 1055 (not shown), communicate with each other in communications system 1000. Each of the system blocks 1010, 1010', 1050, 1060, 1070, 1080 are provided with one or more PHY physical layer blocks and interfaces as selected by the skilled worker in various products, for DSL (digital subscriber line broadband over twisted pair copper infrastructure), cable (DOCSIS and other forms of coaxial cable broadband communications), premises power wiring, fiber (fiber optic cable to premises), and Ethernet wideband network. Cellular base station 1050 two-way communicates with the handsets 1010, 1010', with the Internet, with cellular communications networks and with PSTN (public switched telephone network).

In this way, advanced networking capability for services, software, and content, such as cellular telephony and data, audio, music, voice, video, e-mail, gaming, security, e-commerce, file transfer and other data services, internet, world wide web browsing, TCP/IP (transmission control protocol/Internet protocol), voice over packet and voice over Internet protocol (VoP/VoIP), and other services accommodates and provides security for secure utilization and entertainment appropriate to the just-listed and other particular applications.

The embodiments, applications and system blocks disclosed herein are suitably implemented in fixed, portable, mobile, automotive, seaborne, and airborne, communications, control, set top box, and other apparatus. The personal computer (PC) 1070 is suitably implemented in any form factor such as desktop, laptop, palmtop, organizer, mobile phone handset, PDA personal digital assistant, internet appliance, wearable computer, personal area network, or other type.

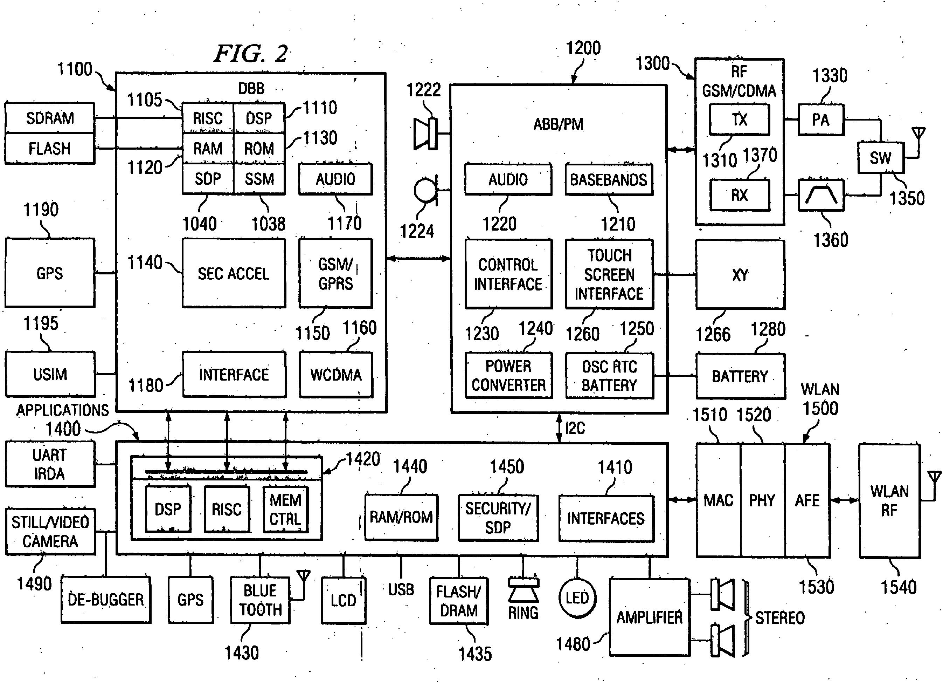

For example, handset 1010 is improved and remains interoperable and able to communicate with all other similarly improved and unimproved system blocks of communications system 1000. On a cell phone printed circuit board (PCB) 1020 in handset 1010, FIGS. 1 and 2 show a processor integrated circuit and a serial interface such as a USB interface connected by a USB line to the personal computer 1070. Reception of software, intercommunication and updating of information are provided between the personal computer 1070 (or other originating sources external to the handset 1010) and the handset 1010. Such intercommunication and updating also occur automatically and/or on request via WLAN, Bluetooth, or other wireless circuitry.

For example, handset 1010 is improved for selectively determinable security and economy when manufactured. Handset 1010 remains interoperable and able to communicate with all other similarly improved and unimproved system blocks of communications system 1000. On a cell phone printed circuit board (PCB) 1020 in handset 1010, there is provided a higher-security processor integrated circuit 1022, an external flash memory and SDRAM 1024, and a serial interface 1026. Serial interface 1026 is suitably a wireline interface, such as a USB interface connected by a USB line to the personal computer 1070 when the user desires and for reception of software intercommunication and updating of information between the personal computer 1070 (or other originating sources external to the handset 1010) and the handset 1010. Such intercommunication and updating also occur via a processor such as for cellular modem, WLAN, Bluetooth, or other wireless or wireline modem processor and physical layer (PHY) circuitry 1028.

Processor integrated circuit 1022 includes at least one processor (or central processing unit CPU) block 1030 coupled to an internal (on-chip read-only memory) ROM 1032, an internal (on-chip random access memory) RAM 1034, and an internal (on-chip) flash memory 1036. A security logic circuit 1038 is coupled to secure-or-general-purpose-identification value (Security/GPI) bits 1037 of a non-volatile one-time alterable Production ID register or array of electronic fuses (E-Fuses). Depending on the Security/GPI bits, boot code residing in ROM 1032 responds differently to a Power-On Reset (POR) circuit 1042 and to a secure watchdog circuit 1044 coupled to processor 1030. A device-unique security key is suitably also provided in the E-fuses or downloaded to other non-volatile, difficult-to-alter parts of the cell phone unit 1010.

It will be noted that the words "internal" and "external" as applied to a circuit or chip respectively refer to being on-chip or off-chip of the applications processor chip 1022. All items are assumed to be internal to an apparatus (such as a handset, base station, access point, gateway, PC, or other apparatus) except where the words "external to" are used with the name of the apparatus, such as "external to the handset."

ROM 1032 provides a boot storage having boot code that is executable in at least one type of boot sequence. One or more of RAM 1034, internal flash 1036, and external flash 1024 are also suitably used to supplement ROM 1032 for boot storage purposes.

Secure Demand Paging SDP circuitry 1040 effectively multiplies the memory space that secure applications can occupy. Processor 1030 is an example of circuitry coupled to the Secure Demand Paging block 1040 to execute a process defined by securely stored code and data from a Secure RAM 1034 as if the secure RAM were much larger by using SDRAM 1024. As described further herein SDP Circuitry 1040 includes real-estate circuitry for determining which secure RAM memory page to wipe, or make available for a new page of code and/or data for a secure application.

FIG. 2 illustrates inventive integrated circuit chips including chips 1100, 1200, 1300, 1400, 1500 for use in the blocks of the communications system 1000 of FIG. 1. The skilled worker uses and adapts the integrated circuits to the particular parts of the communications system 1000 as appropriate to the functions intended. For conciseness of description, the integrated circuits are described with particular reference to use of all of them in the cellular telephone handsets 1010 and 1010' by way of example.

It is contemplated that the skilled worker uses each of the integrated circuits shown in FIG. 2, or such selection from the complement of blocks therein provided into appropriate other integrated circuit chips, or provided into one single integrated circuit chip, in a manner optimally combined or partitioned between the chips, to the extent needed by any of the applications supported by the cellular telephone base station 1050, personal computer(s) 1070 equipped with WLAN, WLAN access point 1060 and Voice WLAN gateway 1080, as well as cellular telephones, radios and televisions, Internet audio/video content players, fixed and portable entertainment units, routers, pagers, personal digital assistants (PDA), organizers, scanners, faxes, copiers, household appliances, office appliances, combinations thereof, and other application products now known or hereafter devised in which there is desired increased, partitioned or selectively determinable advantages next described.

In FIG. 2, an integrated circuit 1100 includes a digital baseband (DBB) block 1110 that has a RISC processor (such as MIPS core, ARM processor, or other suitable processor) and a digital signal processor such as from the TMS320C55x™ DSP generation from Texas Instruments Incorporated or other digital signal processor (or DSP core) 1110, communications software and security software for any such processor or core, security accelerators 1140, and a memory controller. Security accelerators block 1140 provide additional computing power such as for hashing and encryption that are accessible, for instance, when the integrated circuit 1100 is operated in a security level enabling the security accelerators block 1140 and affording types of access to the security accelerators depending on the security level and/or security mode. The memory controller interfaces the RISC core and the DSP core to Flash memory and SDRAM (synchronous dynamic random access memory). On chip RAM 1120 and on-chip ROM 1130 also are accessible to the processors 1110 for providing sequences of software instructions and data thereto. A security logic circuit 1038 of FIGS. 1 and 2 has a secure state machine (SSM) to provide hardware monitoring of any tampering with security features. Secure Demand Paging (SDP) circuit 1040 of FIGS. 1 and 2 is provided and described further herein.

Digital circuitry 1150 on integrated circuit 1100 supports and provides wireless interfaces for any one or more of GSM, GPRS, EDGE, UMTS, and OFDMA/MIMO (Global System for Mobile communications, General Packet Radio Service, Enhanced Data Rates for Global Evolution, Universal Mobile Telecommunications System, Orthogonal Frequency Division Multiple Access and Multiple Input Multiple Output Antennas) wireless, with or without high speed digital data service, via an analog baseband chip 1200 and GSM/CDMA transmit/receive chip 1300. Digital circuitry 1150 includes ciphering processor CRYPT for GSM ciphering and/or other encryption/decryption purposes. Blocks TPU (Time Processing Unit real-time sequencer), TSP (Time Serial Port), GEA (GPRS Encryption Algorithm block for ciphering at LLC logical link layer), RIF (Radio Interface), and SPI (Serial Port Interface) are included in digital circuitry 1150.

Digital circuitry 1160 provides codec for CDMA (Code Division Multiple Access), CDMA2000, and/or WCDMA (wideband CDMA or UMTS) wireless suitably with HSDPA/HSUPA (High Speed Downlink Packet Access, High Speed Uplink Packet Access) (or 1xEV-DV, IxEV-DO or 3×EV-DV) data feature via the analog baseband chip 1200 and RF GSM/CDMA chip 1300. Digital circuitry 1160 includes blocks MRC (maximal ratio combiner for multipath symbol combining), ENC (encryption/decryption), RX (downlink receive channel decoding, de-interleaving, viterbi decoding and turbo decoding) and TX (uplink transmit convolutional encoding, turbo encoding, interleaving and channelizing.). Block ENC has blocks for uplink and downlink supporting confidentiality processes of WCDMA.

Audio/voice block 1170 supports audio and voice functions and interfacing. Speech/voice codec(s) are suitably provided in memory space in audio/voice block 1170 for processing by processor(s) 1110. An applications interface block 1180 couples the digital baseband chip 1100 to an applications processor 1400. Also, a serial interface in block 1180 interfaces from parallel digital busses on chip 1100 to USB (Universal Serial Bus) of PC (personal computer) 1070. The serial interface includes UARTs (universal asynchronous receiver/transmitter circuit) for performing the conversion of data between parallel and serial lines. Chip 1100 is coupled to location-determining circuitry 1190 for GPS (Global Positioning System). Chip 1100 is also coupled to a USIM (UMTS Subscriber Identity Module) 1195 or other SIM for user insertion of an identifying plastic card, or other storage element, or for sensing biometric information to identify the user and activate features.

In FIG. 2, a mixed-signal integrated circuit 1200 includes an analog baseband (ABB) block 1210 for GSM/GPRS/EDGE/UMTS/HSDPA/HSUPA which includes SPI (Serial Port Interface), digital-to-analog/analog-to-digital conversion DAC/ADC block, and RF (radio frequency) Control pertaining to GSM/GPRS/EDGE/UMTS/HSDPA/HSUPA and coupled to RF (GSM etc.) chip 1300. Block 1210 suitably provides an analogous ABB for CDMA wireless and any associated 1xEV-DV, 1×EV-DO or 3xEV-DV data and/or voice with its respective SPI (Serial Port Interface), digital-to-analog conversion DAC/ADC block, and RF Control pertaining to CDMA and coupled to RF (CDMA) chip 1300.

An audio block 1220 has audio I/O (input/output) circuits to a speaker 1222, a microphone 1224, and headphones (not shown). Audio block 1220 has an analog-to-digital converter (ADC) coupled to the voice codec and a stereo DAC (digital to analog converter) for a signal path to the baseband block 1210 including audio/voice block 1170, and with suitable encryption/decryption activated.

A control interface 1230 has a primary host interface (I/F) and a secondary host interface to DBB-related integrated circuit 1100 of FIG. 2 for the respective GSM and CDMA paths. The integrated circuit 1200 is also interfaced to an I2C port of applications processor chip 1400 of FIG. 2. Control interface 1230 is also coupled via access arbitration circuitry to the interfaces in circuits 1250 and the baseband 1210.

A power conversion block 1240 includes buck voltage conversion circuitry for DC-to-DC conversion, and low-dropout (LDO) voltage regulators for power management/sleep mode of respective parts of the chip regulated by the LDOs. Power conversion block 1240 provides information to and is responsive to a power control state machine between the power conversion block 1240 and circuits 1250.

Circuits 1250 provide oscillator circuitry for clocking chip 1200. The oscillators have frequencies determined by one or more crystals. Circuits 1250 include a RTC real time clock (time/date functions), general purpose I/O, a vibrator drive (supplement to cell phone ringing features), and a USB On-The-Go (OTG) transceiver. A touch screen interface 1260 is coupled to a touch screen XY 1266 off-chip.

Batteries such as a lithium-ion battery 1280 and backup battery provide power to the system and battery data to circuit 1250 on suitably provided separate lines from the battery pack. When needed, the battery 1280 also receives charging current from a Battery Charge Controller in analog circuit 1250 which includes MADC (Monitoring ADC and analog input multiplexer such as for on-chip charging voltage and current, and battery voltage lines, and off-chip battery voltage, current, temperature) under control of the power control state machine.

In FIG. 2 an RF integrated circuit 1300 includes a GSM/GPRS/EDGE/UMTS/CDMA RF transmitter block 1310 supported by oscillator circuitry with off-chip crystal (not shown). Transmitter block 1310 is fed by baseband block 1210 of chip 1200. Transmitter block 1310 drives a dual band RF power amplifier (PA) 1330. On-chip voltage regulators maintain appropriate voltage under conditions of varying power usage. Off-chip switchplexer 1350 couples wireless antenna and switch circuitry to both the transmit portion 1310, 1330 and the receive portion next described. Switchplexer 1350 is coupled via band-pass filters 1360 to receiving LNAs (low noise amplifiers) for 850/900MHz, 1800MHz, 1900MHz and other frequency bands as appropriate. Depending on the band in use, the output of LNAs couples to GSM/GPRS/EDGE/UMTS/CDMA demodulator 1370 to produce the I/Q or other outputs thereof (in-phase, quadrature) to the GSM/GPRS/EDGE/UMTS/CDMA baseband block 1210.

Further in FIG. 2, an integrated circuit chip or core 1400 is provided for applications processing and more off-chip peripherals. Chip (or core) 1400 has interface circuit 1410 including a high-speed WLAN 802.11a/b/g interface coupled to a WLAN chip 1500. Further provided on chip 1400 is an applications processing section 1420 which includes a RISC processor (such as MIPS core, ARM processor, or other suitable processor), a digital signal processor (DSP) such as from the TMS320C55x™ DSP generation from Texas Instruments Incorporated or other digital signal processor, and a shared memory controller MEM CTRL with DMA (direct memory access), and a 2D (two-dimensional display) graphic accelerator. Speech/voice codec functionality is suitably processed in chip 1400, in chip 1100, or both chips 1400 and 1100.

The RISC processor and the DSP in section 1420 have access via an on-chip extended memory interface (EMIF/CF) to off-chip memory resources 1435 including as appropriate, mobile DDR (double data rate) DRAM, and flash memory of any of NAND Flash, NOR Flash, and Compact Flash. On chip 1400, the shared memory controller in circuitry 1420 interfaces the RISC processor and the DSP via an on-chip bus to on-chip memory 1440 with RAM and ROM. A 2D graphic accelerator is coupled to frame buffer internal SRAM (static random access memory) in block 1440. A security block 1450 in security logic 1038 of FIG 1 includes secure hardware accelerators having security features and provided for secure demand paging 1040 as further described herein and for accelerating encryption and decryption. A random number generator RNG is provided in security block 1450. Among the Hash approaches are SHA-1 (Secured Hashing Algorithm), MD2 and MD5 (Message Digest version #). Among the symmetric approaches are DES (Digital Encryption Standard), 3DES (Triple DES), RC4 (Rivest Cipher), ARC4 (related to RC4), TKIP (Temporal Key Integrity Protocol, uses RC4), AES (Advanced Encryption Standard). Among the asymmetric approaches are RSA, DSA, DH, NTRU, and ECC (elliptic curve cryptography). The security features contemplated include any of the foregoing hardware and processes and/or any other known or yet to be devised security and/or hardware and encryption/decryption processes implemented in hardware or software.

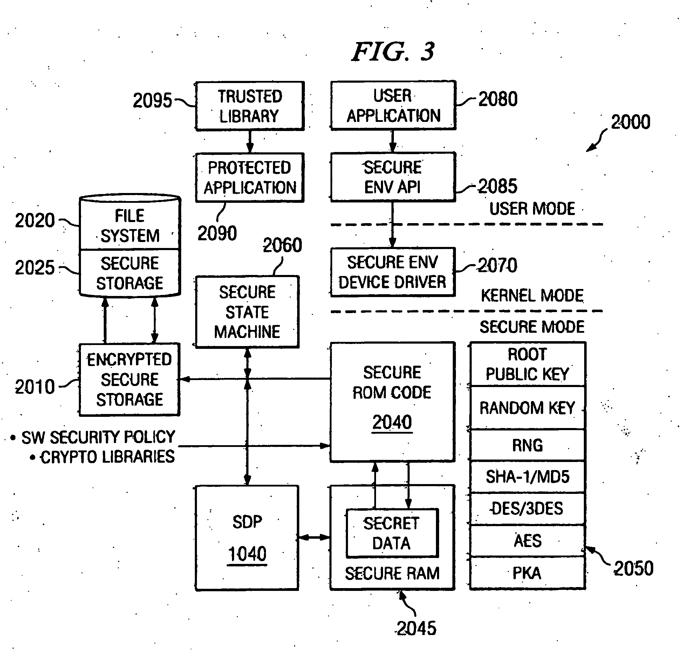

Security logic 1038 of FIG. 1 and FIG. 2 (1038, 1450) includes hardware-based protection circuitry, also called security monitoring logic or a secure state machine 2060 of FIG. 3. Security logic 1038 is coupled to and monitors busses and other parts of the chip for security violations and protects and isolates the protected areas. Security logic 1038 makes secure ROM space inaccessible, makes secure RAM and register space inaccessible and establishes any other appropriate protections to additionally foster security. In one embodiment such a software jump from Flash memory to secure ROM, for instance, causes a security violation wherein, for example, the security logic 1038 produces an automatic immediate reset of the chip. In another embodiment, such a jump causes the security monitoring logic to produce an error message and a re-vectoring of the jump away from secure ROM. Other security violations would include attempted access to secure register or RAM space.

On-chip peripherals and additional interfaces 1410 include UART data interface and MCSI (Multi-Channel Serial Interface) voice wireless interface for an off-chip IEEE 802.15 ("Bluetooth" and high and low rate piconet and personal network communications) wireless circuit 1430. Debug messaging and serial interfacing are also available through the UART. A JTAG emulation interface couples to an off-chip emulator Debugger for test and debug. Further in peripherals 1410 are an I2C interface to analog baseband ABB chip 1200, and an interface to applications interface 1180 of integrated circuit chip 1100 having digital baseband DBB.

Interface 1410 includes a MCSI voice interface, a UART interface for controls, and a multi-channel buffered serial port (McBSP) for data. Timers, interrupt controller, and RTC (real time clock) circuitry are provided in chip 1400. Further in peripherals 1410 are a MicroWire (u-wire 4 channel serial port) and multi-channel buffered serial port (McBSP) to Audio codec, a touch-screen controller, and audio amplifier 1480 to stereo speakers. External audio content and touch screen (in/out) and LCD (liquid crystal display) are suitably provided. Additionally, an on-chip USB OTG interface couples to off-chip Host and Client devices. These USB communications are suitably directed outside handset 1010 such as to PC 1070 (personal computer) and/or from PC 1070 to update the handset 1010.

An on-chip UART/IrDA (infrared data) interface in interfaces 1410 couples to off-chip GPS (global positioning system block cooperating with or instead of GPS 1190) and Fast IrDA infrared wireless communications device. An interface provides EMT9 and Camera interfacing to one or more off-chip still cameras or video cameras 1490, and/or to a CMOS sensor of radiant energy. Such cameras and other apparatus all have additional processing performed with greater speed and efficiency in the cameras and apparatus and in mobile devices coupled to them with improvements as described herein. Further in FIG. 2, an on-chip LCD controller and associated PWL (Pulse-Width Light) block in interfaces 1410 are coupled to a color LCD display and its LCD light controller off-chip.

Further, on-chip interfaces 1410 are respectively provided for off-chip keypad and GPIO (general purpose input/output). On-chip LPG (LED Pulse Generator) and PWT (Pulse-Width Tone) interfaces are respectively provided for off-chip LED and buzzer peripherals. On-chip MMC/SD multimedia and flash interfaces are provided for off-chip MMC Flash card, SD flash card and SDIO peripherals.

In FIG. 2, a WLAN integrated circuit 1500 includes MAC (media access controller) 1510, PHY (physical layer) 1520 and AFE (analog front end) 1530 for use in various WLAN and UMA (Unlicensed Mobile Access) modem applications. PHY 1520 includes blocks for Barker coding, CCK, and OFDM. PHY 1520 receives PHY Clocks from a clock generation block supplied with suitable off-chip host clock, such as at 13, 16.8, 19.2, 26, or 38.4MHz. These clocks are compatible with cell phone systems and the host application is suitably a cell phone or any other end-application. AFE 1530 is coupled by receive (Rx), transmit (Tx) and CONTROL lines to WLAN RF circuitry 1540. WLAN RF 1540 includes a 2.4 GHz (and/or 5GHz) direct conversion transceiver, or otherwise, and power amplifer and has low noise amplifier LNA in the receive path. Bandpass filtering couples WLAN RF 1540 to a WLAN antenna. In MAC 1510, Security circuitry supports any one or more of various encryption/decryption processes such as WEP (Wired Equivalent Privacy), RC4, TKIP, CKIP, WPA, AES (advanced encryption standard), 802.11i and others. Further in WLAN 1500, a processor comprised of an embedded CPU (central processing unit) is connected to internal RAM and ROM and coupled to provide QoS (Quality of Service) IEEE 802.11e operations WME, WSM, and PCF (packet control function). A security block in WLAN 1500 has busing for data in, data out, and controls interconnected with the CPU. Interface hardware and internal RAM in WLAN 1500 couples the CPU with interface 1410 of applications processor integrated circuit 1400 thereby providing an additional wireless interface for the system of FIG. 2. Still other additional wireless interfaces such as for wideband wireless such as IEEE 802.16 "WiMAX" mesh networking and other standards are suitably provided and coupled to the applications processor integrated circuit 1400 and other processors in the system.

Further described next are improved secure circuits, structures and processes and improving the systems and devices of FIGS. 1 and 2 with them.

FIG. 3 illustrates an advantageous form of software modes and architecture 2000 for the integrated circuits 1100 and 1400. Encrypted secure storage 2010 and a file system 2020 provide storage for this arrangement. Selected contents or all contents of encrypted secure storage 2010 are further stored in a secure storage area 2025.

Next a secure mode area of the architecture is described. In a ROM area of the architecture 2000, secure ROM code 2040 together with secure data such as cryptographic key data are manufactured into an integrated circuit such as 1100 or 1400 including processor circuitry. Also a secure RAM 2045 is provided. Secret data such as key data is copied or provided into secure RAM 2045 as a result of processing of the Secure ROM Code 2040. Further in the secure mode area are modules suitably provided for RNG (Random Number Generator), SHA-1/MD5 hashing software and processes, DES/3DES (Data Encryption Standard single and triple-DES) software and processes, AES (Advanced Encryption Standard) software and processes, and PKA (Private Key Authentication) software and processes.

Further in FIG. 3, secure demand paging SDP 1040 hardware and/or software effectively increases Secure RAM 2045 by demand paging from secure storage 2010. A hardware-implemented secure state machine (SSM) 2060 monitors the buses, registers, circuitry and operations of the secure mode area of the architecture 2000. In this way, addresses, bits, circuitry inputs and outputs and operations and sequences of operations that violate predetermined criteria of secure operation of the secure mode area are detected. SSM 2060 then provides any or all of warning, denial of access to a space, forcing of reset and other protective measures. Use of independent on-chip hardware for SSM 2060 advantageously isolates its operations from software-based attacks. SSM 2060 is addressable and configurable to enable a Hashing module, enable an Encryption/Decryption module, and lock Flash and DRAM spaces.

SSM 2060 monitors busses and other hardware blocks, pin boundary and other parts of the chip for security violations and protects and isolates the protected areas. SSM 2060 makes secure ROM and register space inaccessible, and secure RAM space inaccessible and establishes any other appropriate protections to additionally foster security. In one embodiment such a software jump from flash to secure ROM, for instance, causes a security violation wherein, for example, SSM 2060 produces an automatic immediate reset of the chip. In another embodiment, such a jump causes the security monitoring logic to produce an error message and a re-vectoring of the jump away from secure ROM. Other security violations would include attempted access to reconfigure the SSM 2060 or attempted access to secure RAM space.

In FIG. 3, a kernel mode part of the software architecture includes one or more secure environment device drivers 2070. Driver 2070 of FIG. 3 suitably is provided as a secure environment device driver in kernel mode.

Further in FIG. 3, a user application 2080 communicates to and through a secure environment API (application peripheral interface) software module 2085 to the secure environment device driver 2070. Both the user app 2080 and API 2085 are in a user mode part of the software architecture.

A protected application 2090 provides an interface as security may permit, to information in file system 2020, secure storage 2025, and a trusted library 2095 such as an authenticated library of software for the system.

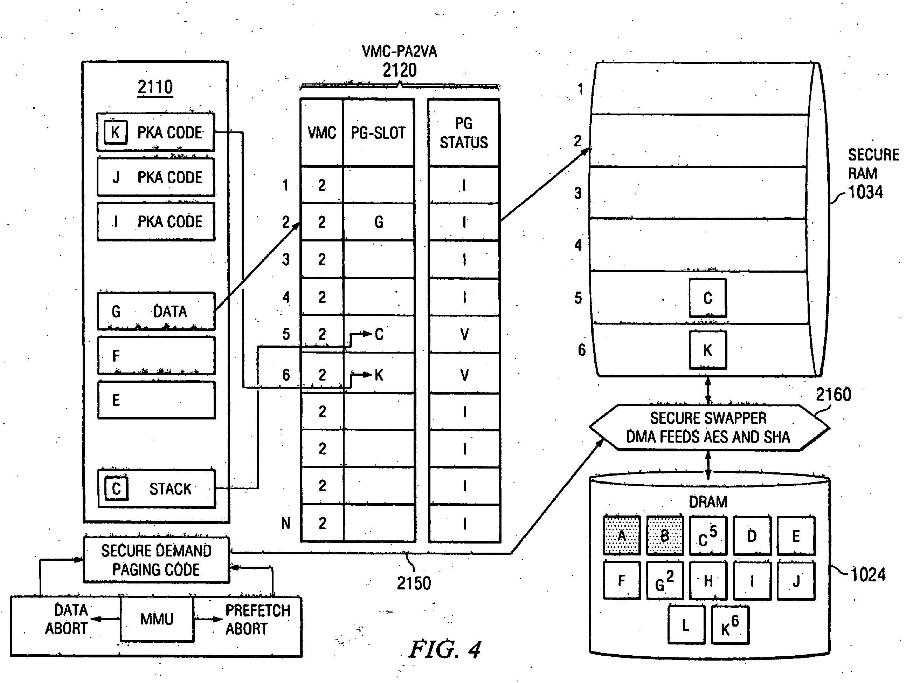

Turning to FIG. 4, a Secure Demand Paging (SDP) 1040 secure hardware and software mechanism desirably has efficient page wiping for replacement in internal Secure RAM 1034 of physical pages not currently or often used by the software application, such as protected application 2090. Such pages include pages that may or may not need to be written back to external or other memory.

An SDP 1040 hardware and software process efficiently governs the finding of appropriate pages to wipe and various embodiments confer different mixes of low complexity, low memory space and chip real-estate space occupancy, and low time consumption, low power consumption and low processing burden. The quality of the choice of the page to wipe out for replacement is advantageously high. "Wipe" includes various alternatives to overwrite, erase, simply change the state of a page-bit that tags or earmarks a page, and other methods to free or make available a page space or slot for a new page.

A hardware-based embodiment efficiently identifies the appropriate page to wipe and applies further efficient SDP swap and other structures and operations. In this embodiment, a hardware mechanism monitors different internal RAM pages used by the SDP software mechanism. The hardware mechanism also detects and flags via registers accessible by software, which page is Dirty (modified) or Clean (unmodified). (A Write access to a page makes it become Dirty.)

This embodiment also computes according to the ordered Read and Write accesses that occurred on the different pages, statistical information about the internal RAM page Usage Level. Usage Level is divided into Very Low usage, Low usage, Medium Usage, and High Usage, for instance.

SDP 1040 then computes from all the information, according to an embedded sorting process, which pages are the more suitable pages to be wiped. SDP 1040 variously considers, for example, impact of each page on the current application and the time required for a page to be wiped out. Wiping a low usage page impacts the application slightly, but a higher usage page is needed by the application more. A Dirty page consumes writeback time to external memory and a Clean page does not need to be written back. SDP 1040, in one example, prioritizes the pages that are more suitable to be wiped out for less time consumption and application impact in the following priority order:

> CODE page tagged as VERY LOW usage
> CODE page tagged as LOW usage
> DATA READ page tagged as VERY LOW usage
> DATA READ page tagged as LOW usage
> DATA WRITE page tagged as VERY LOW usage
> DATA WRITE page tagged as LOW usage
> CODE page tagged as MEDIUM usage
> DATA READ page tagged as MEDIUM usage
> DATA WRITE page tagged as MEDIUM usage

Then the process logs the results to prognostic registers such as page counters described hereinbelow. Subsequently, the SDP software mechanism just reads the prognostic registers to find the best pages to wipe.

In the case of a strong security embodiment, the SDP 1040 hardware and/or software just described herein is configured and accessed by the main processing unit in Secure Mode, or highly privileged modes without impact on the main processing unit functionality. Restrictions on Secure Mode and privilege are removed in whole or in part for less secure embodiments. Some embodiments make demand paging itself more efficient without an SSM 2060. Other embodiments provide security features that together with the improved demand paging provide a Secure Demand Pager or SDP.

Some embodiments improve very significantly the page selection mechanism with regard to competing demands of time and power consumption, and the quality of the choice of the page to wipe out for replacement.

Some embodiments generate automatically and with little or no time overhead the dirty page status and the best page to wipe.

Hardware-based embodiments are often more resistant to tampering by software running in other processor modes besides Secure or Privileged Modes. That is, such embodiments are less sensitive to Denial of Service (DoS) attack on an internal mechanism which might force a software application not to run properly.

Some embodiments having Dirty page status generating circuits further detect whether Code pages used in internal RAM have been modified by an attacker. This capability contributes to the security robustness of SDP paging methods.

Any demand paging system, whether secure or not, can be improved according to the teachings herein, with benefits depending on relative system Swap Out times and Swap In times, and also systems wherein the access time mix of various types of external storage devices from which even the Swap In times to on-chip RAM vary, and other factors. The improvements taught herein are of benefit in a Secure Demand Paging system with Swaps between on-chip RAM and off-chip DRAM, for instance, because Swap Out is used for modified pages and not used for unmodified pages and in some systems the Swap Out time with encryption and/or hashing adds relative to the Swap In time is greater than the Swap Out time would be in a less-secure system lacking the encryption and/or hashing.

Various embodiments are implemented in any integrated circuit manufacturing process such as different types of CMOS (complementary metal oxide semiconductor), SOI (silicon on insulator), SiGe (silicon germanium), and with various types of transistors such as single-gate and multiple-gate (MUGFET) field effect transistors, and with single-electron transistors and other structures. Embodiments are easily adapted to any targeted computing hardware platform supporting or not supporting a secure execution mode, such as UNIX workstations and PC-desktop platforms.

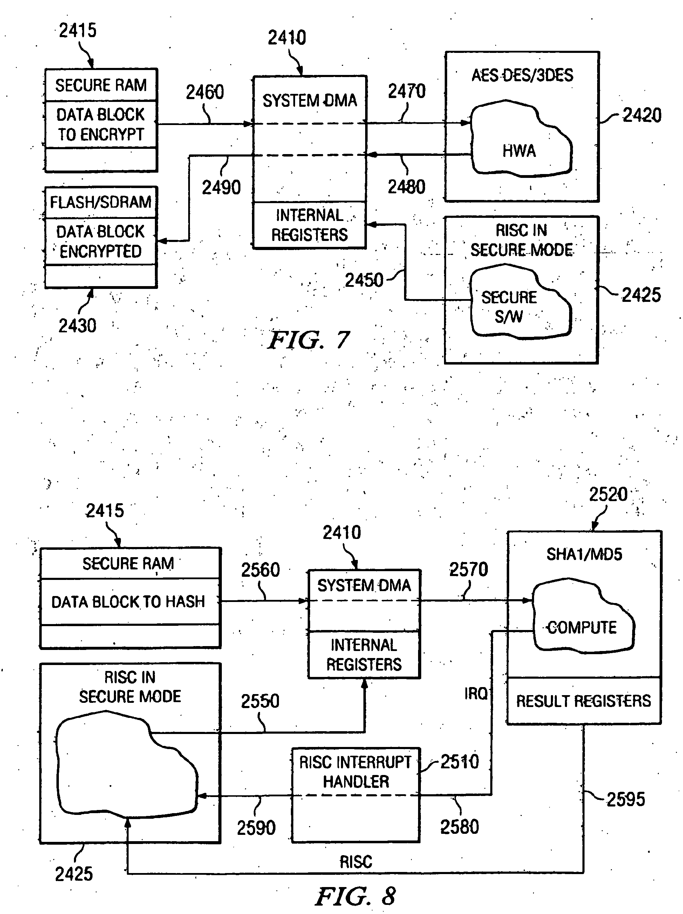

FIGS. 4 and 8 depict external storage SDRAM 1024 and secure Swapper of 4K pages being Swapped In and Swapped Out of the secure environment. A process of the structure and flow diagram of FIG. 4 suitably executes inside the secure environment as an integral part of the SDP manager code. Note that many pages illustrated in the SDP 1040 are held or stored in the external SDRAM 1024 and greatly increase the effective size of on-chip secure memory 1034.

The SDP 1040 has a pool of pages that are physically loaded with data and instructions taken from a storage memory that is suitably encrypted (or not) external to the secure mode. SDP 1040 creates virtual memory in secure mode and thus confers the advantages of execution of software that far exceeds (e.g., up to 4 Megabytes or more in one example) the storage space in on-chip Secure RAM.

In FIG. 4, Secure RAM 1034 stores a pool of 4K pages, shown as a circular data structure in the illustration. The pool of pages in Secure RAM 1034 is updated by the SDP according to Memory Management Unit (MMU) page faults resulting from execution of secure software currently running on the system.

In FIG. 4, a processor such as an RISC processor, has a Memory Management Unit MMU with Data Abort and Prefetch Abort outputs. The processor runs SDP Manager code designated Secure Demand Paging Code in FIG. 4. The SDP Manager is suitably fixed in a secure storage of the processor and need not be swapped out to an insecure area. See coassigned, co-filed application U.S. non-provisional patent application TI-38213 "Methods, Apparatus, and Systems for Secure Demand Paging and Other Paging Operations for Processor Devices".

At left, Protected Applications (PAs) occupy a Secure Virtual Address Space 2110 having Virtual Page Slots of illustratively 4K each. In this way, a Secure Virtual Memory (SVM) is established. Secure Virtual Address Space 2110 has Code pages I,J,K; Data pages E,F,G; and a Stack C. The Secure Virtual Address Space as illustrated has a Code page K and a Data page G which are respectively mapped to physical page numbers 6 and 2 in MMU Mapping Tables 2120, also designated PA2VA (physical address to virtual address). In some embodiments, the PA has its code secured by PKA (public key acceleration).

Some embodiments have MMU Mapping Table 2120 in block MMU of FIG. 4 that have Page Table Entries (PTEs) of 32 bits each, for instance. In operation, the PA (Protected Application) and the MMU Mapping Table 2120 are maintained secure on-chip. In other embodiments, a Physical-Address-to-Virtual-Address table PA2VA 2120 provided for SDP 1040 has PTEs pertaining specifically to pages stored in Secure RAM and as illustrated in FIG. 4.

One of the bits in a PTE is a Valid/Invalid bit (also called an Active bit ACT[N] herein) illustrated with zero or one for Invalid (I) or Valid (V) entries respectively. An Invalid (I) bit state in ACT[N] or in the MMU Mapping Table for a given page causes an MMU page fault or interrupt when a virtual address is accessed corresponding to a physical address in that page which is absent from Secure RAM.

Further in FIG. 4, a hardware arrangement is located in, associated with, or under control of a RISC processor.

The RISC processor has an MMU (memory management unit) that has data abort and/or prefetch abort operations. The hardware supports the secure VAS (virtual address space) and includes a Secure static RAM. The Secure RAM is illustrated as a circular data structure, or revolving scavengeable store, with physical pages 1, 2, 3, 4, 5, 6. Stack C is swapped into physical page 5 of Secure SRAM, corresponding with the previously-mentioned Page Table Entry 5 for Stack C in the MMU Mapping Tables. Similarly, Code K is swapped into physical page 6 of Secure SPAM, corresponding with the previously-mentioned Page Table Entry 6 for Code K in the MMU Mapping Tables.

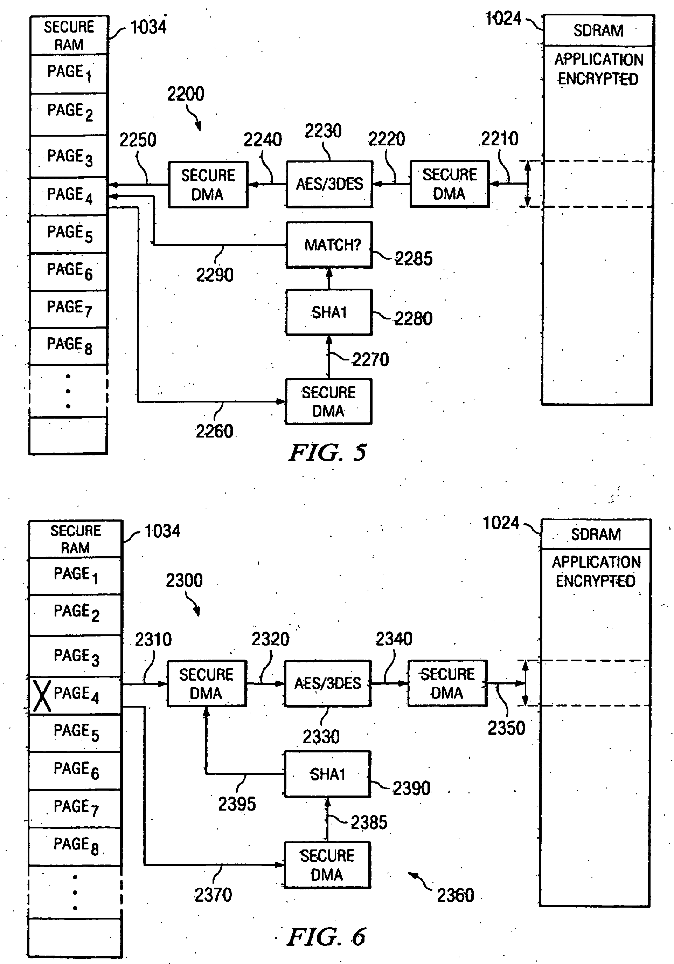

Associated with the Secure RAM is a Secure Swapper 2160. Secure Swapper 2160 is illustrated in FIGS. 5-8 and has secure Direct Memory Access (DMA) that feeds AES (encryption) and SHA (hashing) hardware accelerators. The secure swapping process and hardware protect the PA information at all times.

In FIG. 4, coupled to the Secure Swapper DMA is a non-secure DRAM 1024 holding encrypted and authenticated pages provided by SDP secure swapper 2160. The DRAM pages are labeled pages A, B, C(mapped to physical page 5), D, E, F, G (mapped to physical page 2), H, I, J, K (mapped to physical page 6), and L.

SDP hardware provides secure page swapping, and the virtual address mapping process is securely provided under Secure Mode. Code and Data for SDP Manager software are situated in Secure RAM in a fixed PPA (primary protected application) memory address space from which swapping is not performed. Execution of code sequences 2150 of the SDP Code control Secure Swapper 2160. For example, a High Level Operating System (HLOS) calls code to operate Public Key Acceleration (PKA) or secure applet. The PKA is a secure-state application (PA) that is swapped into Secure RAM as several pages of PKA Code, Data and Stack.

In FIG. 4, a number N-1 Valid Bits exist in the page entries of the MMU Mapping Tables 2120 at any one time because of a number N (e.g. six in the illustration) of available Secure RAM 1034 pages. In some embodiments, one spare page is suitably kept or maintained for performance reasons. Page Data is copied, swapped, or ciphered securely to and from the DRAM 1024 to allow the most efficient utilization of expensive Secure RAM space. Secure RAM pages are positioned exactly at the virtual address positions where they are needed, dynamically and transparently in the background to PAs.

In FIG. 4, SDP software coherency with the hardware is maintained by the MMU so that part of the software application is virtually mapped in a Secure OS (Operating System) virtual machine context VMC according to Virtual Mapping 2120. In this example, the VMC is designated by entries "2" in a column of PA2VA. If a context switch is performed, then the VMC entries in PA2VA are changed to a new VMC identification number. The part of the software application is that part physically located in the Secure RAM and has a Physical Mapping 2120 according to a correspondence of Virtual Pages of Virtual Mapping 2110 to respective physical pages of the Physical Mapping 2120.

The information representing this correspondence of Virtual Mapping to Physical Mapping is generated by the MMU and stored in internal buffers of the MMU.

The virtual space is configured by the MMU, and the DRAM 1024 is physically addressed. Some embodiments use a single translation vector or mapping PA2VA from the virtual address space to physical address space according to a specific mapping function, such as by addition (+) by itself or concatenated with more significant bits (MSB), given as

$$\texttt{Virtual\_address\_space = phy\_address\_space + x,}$$

where x is an MSB offset in an example 4GBytes memory range [0 : 4GB] + y,
and where y is an LSB offset between the virtual address and the physical address in Secure RAM.

In FIG. 4 the scavenging process puts a new page in a location in physical Secure RAM 1034 space depending on where a previous page is swapped out. Accordingly, in Secure RAM space, the additional translation table PA2VA 2120 is provided to provide an LSB address offset value to map between the virtual address and the physical address in Secure RAM. MSB offsets x are stored in a VMC_MMU_TABLE in Secure RAM.

In some mixed-memory embodiments DRAM 1024 has enough shorter access time or lower power usage than Flash memory to justify loading and using DRAM 1024 with pages that originally reside in Flash memory. In other embodiments, SDP swaps in PA from Flash memory for read-only pages like PA code pages and the PA is not copied to DRAM. In still other embodiments, parts of the PA are in Flash memory and other parts of the PA are copied into DRAM 1024 and accessed from DRAM 1024. Accordingly, a number of embodiments accommodate various tradeoffs that depend on, among other things, the relative economics and technology features of various types of storage.

In establishing Mappings 2110 and 2120 and the correspondence therebetween, the following coherency matters are handled by SDP.

When loading a new page into Page Slot N in Secure RAM as described in FIG. 5, the previous Virtual to Physical mapping is no longer coherent. The new page corresponds to another part of the source application. The Virtual Mapping 2110 regarding the Swapped Out previous page N is obsolete regarding Page N. Entries in the MMU internal buffers representing the previous Virtual to Physical Mapping correspondence are now invalidated. An access to that Swapped Out page generates a Page Fault signal.

Also, entries in an instruction cache hierarchy at all levels (e.g. L1 and L2) and in a data cache hierarchy at all levels are invalidated to the extent they pertain to the previous Virtual to Physical Mapping correspondence. Accordingly, a Swapped Out code page is handled for coherency purposes by an instruction cache range invalidation relative to the address range of the Code page. A Data page is analogously handled by a data cache range invalidation operation relative to the address range of the Data page. Additionally, for loading Code pages, a BTAC (Branch Target Address Cache or Branch Target Buffer BTB) flush is executed at least in respect of the address tags in the page range of a wiped Code page, in order to avoid taking a predicted branch to an invalidated address.

When wiping out a page from Secure RAM, some embodiments Code pages that are always read-only. Various of these embodiments distinguish between Data (Read/Write) pages and Code (Read Only) pages. If the page to wipe out is a Data page, then to maintain coherency, two precautions are executed. First, the Data cache range is made clean (dirty bit reset) in the range of addresses of the Data Page. Second, the Write Buffer is drained so that any data retained in the data caches (L1/L2) are written and posted writes are completed. If the page to wipe out is a Code page, the wiping process does not need to execute the just-named precautions because read-only Code pages were assumed in this example. If Code pages are not read-only, then the precautions suitably are followed.

The SDP paging process desirably executes as fast as possible when wiping pages. Intelligent page choice reduces or minimizes the frequency of unnecessary page wipes or Swaps since an intelligent page choice procedure as disclosed herein leaves pages in Secure RAM that are likely to be soon used again. Put another way, if a page were wiped from Secure RAM that software is soon going to use again, then SDP would consume valuable time and power to import the same page again.

An additional consideration in the SDP paging process is that the time consumption for wiping pages varies with Type of page. For example, suppose a Code Page is not required to be written back to the external memory because the Code Page is read-only and thus has not been modified. Also, a Data Page that has not been modified does not need to be written back to the external memory. By contrast, a Data Page that has been modified is encrypted and hashed and written back to the external memory as described in connection with FIG. 6.

FIG. 5 depicts SDP hardware and an SDP process 2200 when importing a new page from SDRAM 1024. Consider an encrypted application in the SDRAM 1024. The description here equally applies to Code pages and Data pages. A step 2210 operates so that when a new page is needed by a processor and that page is missing from Secure RAM 1034, then that page is read from an application source location in the SDRAM 1024. Next a step 2220 performs a Secure DMA (Direct Memory Access) operation to take the new page and transfer the new page to a decryption block 2230. In a step and structure 2240, the decryption block 2230 executes decryption of the page by AES (Advanced Encryption Standard) or 3DES (Triple Data Encryption Standard) or other suitable decryption process. As the AES/3DES accelerator 2230 is decrypting the content, the output of the AES/3DES accelerator 2230 is taken by another Secure DMA operation in a step 2250.

Then, in FIG. 5, Secure DMA overwrites a wiped Secure RAM page with the new page, e.g., at page position Page4 in the Secure RAM 1034. Further, Secure DMA in a step 2260 takes the new page from Secure RAM 1034 and transfers the new page in a step 2270 to a hashing accelerator 2280 in process embodiments that authenticate pages. The hashing accelerator 2280 calculates the hash of the new page by SHA1 hashing or other suitable hashing process to authenticate the page. A comparison structure and step 2285 compares the page hash with a predetermined hash value. If the page hash fails to match the predetermined hash value, the page is wiped from Secure RAM in a step 2290, or alternatively not written to Secure RAM 1034 in step 2250 until the hash authentication is successful. If the page hash matches the predetermined hash value for that page, the page remains in Secure RAM, or alternatively is written to Secure RAM by step 2250, and the page is regarded as successfully authenticated. A suitable authentication process is used with a degree of sophistication commensurate with the importance of the application.

FIG. 6 depicts an SDP process 2300 of wiping out and Swapping Out a page. The SDRAM, Secure RAM, Secure DMA, encryption/decryption accelerator 2330, and hashing accelerator 2390 are the same as in FIG. 5, or provided as additional structures analogous to those in FIG. 5. The process steps are specific to the distinct SDP process of wiping out a page such as Page4. In a version of the wiping out process 2300, a step 2310 operates Secure DMA to take a page to wipe and Swap Out, e.g., Page 4 from Secure RAM 1034. A step 2320 transfers the page by Secure DMA to the AES/3DES encryption accelerator 2330. Then in a step 2340 the AES/3DES encryption accelerator encrypts the content of the page. Secure DMA takes the encrypted page from AES/3DES encryption accelerator in a succeeding step 2350 and transfers and writes the page into the external SDRAM memory and overwrites the previous page therein. In the process, the wiped out Page4 information may be destroyed in the internal Secure RAM 1034, such as by erasing or by replacement by a replacement page according to the process of FIG. 5. Alternatively, the Page4 may be wiped out by setting a page-specific bit indicating that Page4 is wiped.

In FIG. 6 a further SDP process portion 2360 substitutes for step 2310 the following steps. Secure DMA in a step 2370 takes the page from Secure RAM and transfers the page in a step 2385 to the hashing accelerator 2390 in process embodiments involving authenticated pages. The hashing accelerator 2390 calculates and determines the hash value of the new page by SHA1 hashing or other suitable hashing process. In this way, accelerator 2390 thus provides the hash value that constitutes the predetermined hash value for use by step 2285 of FIG. 5 in looking for a match (or not) to authenticate a page hash of a received Swapped In page. The page content of Page4 and the thus-calculated hash value are then obtained by Secure DMA in a step 2395 whereupon the process continues through previously-described steps 2320, 2330, 2340, 2350 to write the page and hash value to the external memory SDRAM 1024.

In FIG. 7, AES/xDES block encryption/decryption functional architecture includes a System DMA block 2410 coupling Secure RAM 2415 to encryption HWA 2420. A RISC processor 2425 operates Secure Software (S/W) in Secure Mode. On Swap Out, an encrypted data block is supplied to Memory 2430 such as a DRAM, Flash memory or GPIOs (General Purpose Input/Outputs). The decryption process on Swap In is the same as the one described in FIG. 7 but with memory 2430 as data block source and Secure RAM 2415 as data block destination.

Now consider the flow of an encrypted Swap Out process executed in FIG. 7. In a step 2450, RISC processor 2425 in Secure Mode configures the DMA channels defined by Internal registers of System DMA 2410 for data transfer to cryptographic block 2420. Upon completion of the configuration, RISC processor 2425 can go out of secure mode and execute normal tasks. Next, in a step 2460 Data blocks are automatically transferred from Secure RAM via System DMA 2410 and transferred in step 2470 to encryption block 2420 for execution of AES or xDES encryption of each data block. Then in a step 2480, Data blocks are computed by the chosen HWA (hardware accelerator) crypto-processor 2420 and transmitted as encrypted data to System DMA 2410. The process is completed in a step 2490 wherein encrypted Data blocks are transferred by DMA 2410 to memory 2430.

In FIG. 8, SHA1/MD5 Hashing architecture includes the System DMA block 2410 coupling Secure RAM 2415 to Hash HWA 2520. RISC processor 2425 operates Secure Software (S/W) in Secure Mode. System DMA 2410 has Internal Registers fed from the RISC processor. Hash block 2520 has Result registers coupled to the RISC processor. An Interrupt Handler 2510 couples Hash block 2520 interrupt request IRQ to the RISC processor 2425.

The flow of a Hash process executed in FIG. 8 is described next. In a step 2550, RISC processor 2425 in Secure Mode configures the DMA channels defined by Internal registers of System DMA 2410 for data transfer to Hash block 2520. Upon completion of the configuration, RISC processor 2425 can go out of secure mode and execute normal tasks. Next, in a step 2560 a Data block is automatically transferred from Secure RAM 2415 via System DMA 2410 and transmitted in step 2570 to Hash block 2420. A hash of the data block is generated by the chosen HWA crypto-processor 2520 by SHA-1 or MD5 or other suitable Hash. In a succeeding step 2580, HWA 2520 signals completion of the Hash by generating and supplying interrupt IRQ to Interrupt Handler 2510. Interrupt Handler 2510 suitably handles and supplies the hash interrupt in a step 2590 to RISC processor 2425. When the interrupt is received, if RISC processor 2425 is not in Secure Mode, then RISC processor 2425 re-enters Secure Mode. The process is completed in a step 2595 wherein RISC processor 2425 operating in Secure Mode gets Hash bytes from Result registers of HWA 2520.

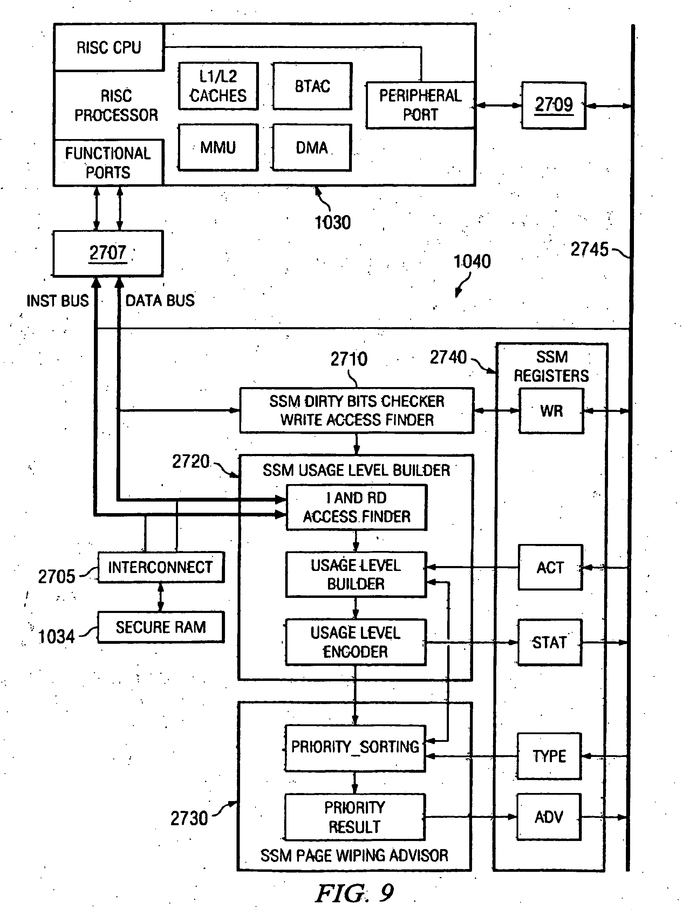

The description now turns to FIGS. 9, 10 and 11. FIG. 9 shows details of a processor 1030 and SDP 1040. The processor 1030 includes a RISC processor with functional ports. Secure RAM 1034 is coupled via interconnect 2705 to an on-chip Instruction INST Bus and an on-chip DATA Bus. A bus interface 2707 couples the functional ports of the RISC Processor 1030 to the INST and DATA buses. RISC Processor 1030 also has a RISC CPU (central processing unit) coupled to a Peripheral Port block which is coupled in turn via a bus interface 2709 to an on-chip bus 2745.

Further in FIG. 9, SDP circuitry 1040 is coupled to the INST bus, DATA bus, and on-chip bus 2745. SDP circuitry 1040 is under hardware protection of a Secure State Machine (SSM). SDP circuitry 1040 has Dirty Bits Checker and Write Access Finder circuit 2710 to detect modifications to pages, Usage Level Builder circuit 2720, Page Wiping Advisor circuit 2730, and secure register group 2740.

Register group 2740 has added secure registers for SDP. These registers ACT, TYPE, WR, STAT, and ADV have bit entries respective to each of the pages 0 to N and are accessible by Secure Supervisor software of SDP. Register group 2740 is coupled to on-chip bus 2740.

Dirty Bits Checker and Write Access Finder circuit 2710 is coupled to the DATA bus and coupled to register group 2740.

Usage Level Builder circuit 2720 has a first block Instruction (I) and Read (RD) Access Finder coupled to the INST bus and DATA bus. This circuit detects each instance of RD access to a Code page via INST bus, or RD access to any page via DATA bus.

Usage Level Builder 2720 has a second Usage Level Builder block coupled to receive information from Dirty Bits Checker and Write Access Finder 2710 and from the I and RD Access Finder block in circuit 2720. This second block receives page activation bits from the ACT register in register group 2740 and generates Usage Level data.

Next, the Usage Level data is coupled to Usage Level Encoder block in circuit 2720. Codes for tiers of Usage Level are fed to the STAT register and to Page Wiping Advisor 2730 Priority Sorting block.

In Page Wiping Advisor 2730, the Priority Sorting block is coupled to receive page-specific Type data from the TYPE register. Also, Priority Sorting block is suitably coupled, depending on embodiment to receive Usage Level information from the middle Usage Level Builder block in circuit 2730. Further, Priority Sorting block is suitably coupled to feed back sorting information to that middle Usage Level Builder block.

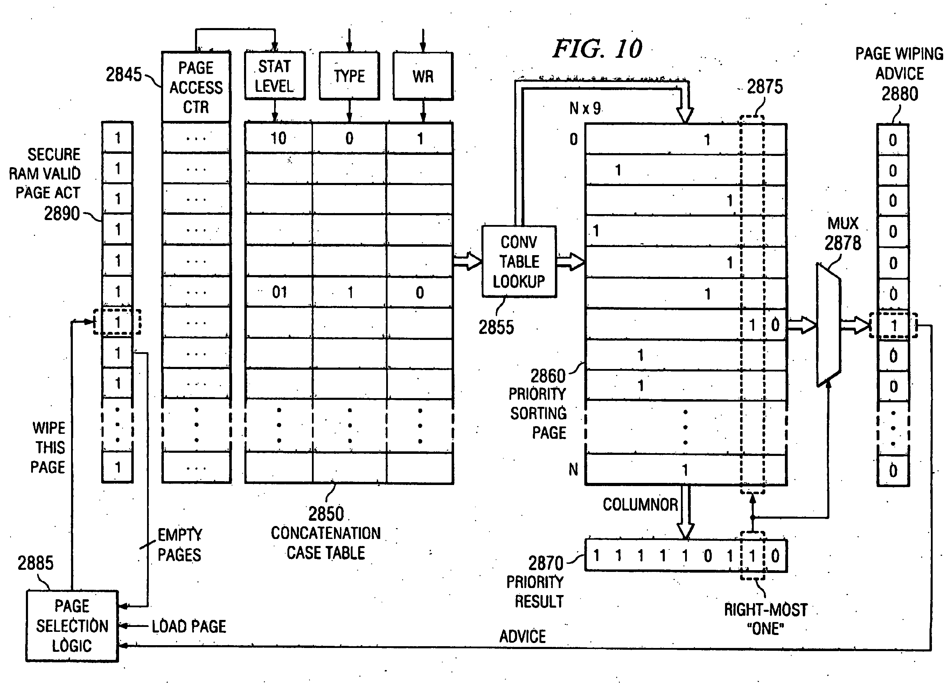

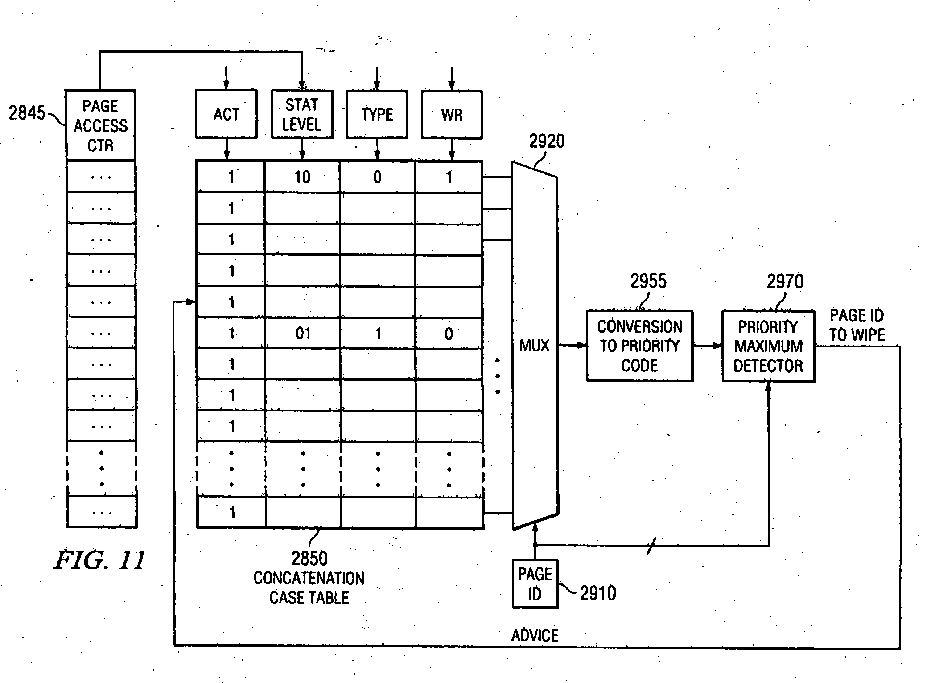

Further in Page Wiping Advisor 2730, Priority Sorting block feeds sorting information as described in FIGS. 10 and 11 to Priority Result block. Priority Result block determines which page(s) has highest priority for wiping and writes this information to the Advice register ADV in register group 2740.

The wiping Advice information in Advice register ADV is accessed by RISC Processor 1030 via bus 2745, such as by interface 2709 and Peripheral Port. Based on the information in register group 2740, RISC Processor 1030 executes SDP software to swap out a Dirty Page N identified by ADV[N] register and WR[N] register one bit and swap in a new page, or simply swap in a new page if the wiped page N identified by register bits ADV [N] and WR[N]=0 (zero bit) was a Clean (unmodified) page.

Four Process and structure areas are performed in one or more exemplary SDP paging processes and structures.

First, the Code Pages are differentiated from the Data Pages by identifying and entering an entry in a page-specific field in the TYPE register respective to each such Code or Data page.

Second, write access activity is monitored in a register WR[N] to determine each page most likely to be a READ page in a pool of Data Pages. Register WR[N], in other words, has bits indicating of which pages are Clean (unmodified) or Dirty (modified).

Third, the ACT register is loaded with page activate entries and statistical information is built up to populate the STAT register for the activated pages represented in the ACT register.

Fourth, the foregoing three types of information are then utilized according to a four-STEP process described next to produce wiping Advice for one or more pages in an ADV register.

In FIG. 9, a process called Wiping Advisor herein operates in one of various alternative ways, and two examples are described in FIGS. 10 and 11. "&" stands for concatenation and AND means Boolean-And in the text that follows.

Registers for use in FIGS. 9, 10 and 11 are a TYPE Page Type register having entries of zero (0) for each Data Page and one (1) for each Code page. WR register has a respective dirty bit for signs of modification of each secure RAM page. ACT register has a respective entry to activate or de-activate the Usage Level of a page. STAT register holds a respective entry representing one of four levels of ACT for an activated page. ADV register of FIG. 9 is the Wiping Advisor register 2880 of FIG. 10 and has a respective entry for each page wherein one (1) means the recommendation is to wipe the page and zero (0) means not to wipe the page. Sixteen page counters or registers with a subtractor are also provided.

The Wiping Advisor has a process with four STEPs ONE, TWO, THREE and FOUR. STEP ONE handles the First, Second and Third Process and structure areas and sets up priority encodings for each page for the Fourth Process and structure area. STEPS TWO, THREE and FOUR complete the Fourth Process and structure area above.

STEP ONE

First Process and structure area: The Code Pages are differentiated from the Data Pages by TYPE[N] according to TABLE 1. Code Pages come from Instruction Cache accesses and Data Pages come from Data Cache accesses, so the access signals to the caches are used to derive and enter the TYPE[N] register bits. Also some software applications explicitly identify which pages are code pages and which pages are data pages. Kernel and/or SDP software may define data stack pages and data heap pages, and such available information is used by some embodiments according to the teachings herein.

Suppose the Code or Data page type information is not directly available, because the architecture does not have separate Instruction Cache and Data Cache and the application does not identify the pages. Then the Write access activity is suitably monitored regarding each page in order to determine in a proactive or preemptive way which page is most likely not a Code Page in the pool of Data Pages. If a page is written, then it is probably a Data Page and not a Code Page. The default configuration is that a page is a Data Page so that both read and write access tabulations are encompassed.

When Code Pages can be unambiguously identified, then differentiating Code from Data pages also confers control. When Code Pages are identified, security circuitry is suitably provided to automatically prevent Code pages from being modified or hacked on the fly while each Code Page is in Secure RAM. In cases where a Code Page is obtained from the Data Cache, then the page is tabulated as a Data Page unless the application explicitly identifies it as a Code Page. Since Code Pages take less time to wipe in systems wherein Code Pages are read-only (Clean by definition), the Code Pages are assigned somewhat higher priority to wipe in STEP FOUR than pages of similar Usage Level that are modified, for example.

TABLE 1 PAGE TYPE BITS

TYPE[N]

| BITS | MEANING |
|---|---|
| 0 | Data Page |
| 1 | Code Page |

Second Process and structure area: In FIGS. 9-11, a register WR codes a field WR[N] where "one" (1) signifies at least one write to page N and zero (0) signifies that the page has not been written. This register field WR[N] implements the time-consumption consideration that a page that has been not been written takes less time to wipe since the page need not be, and suitably is not, written back to external memory. The register field WR[N] is suitably reset to zero (0) by having zero (0) is written in it by the Peripheral Port.

TABLE 2 describes the meaning of different values of register field WR[N].

TABLE 2: CODES SIGNIFYING WRITE OR NOT TO PAGE N

| WR[N] | DESCRIPTION |
|---|---|
| 0 | No write to Page N, called a Read Page |
| 1 | One or more actual writes have occurred to Page N, called a Write Page or Dirty Page |

In some embodiments the Second Process and structure area considers the characterization of a page as a Read Page to be a matter of initial assumption that needs to be checked by the circuitry. In this approach, when a page is detected to be potentially a Read Page, then a drain of the Write Buffer and a Clean Data Cache Range (applied only to the respective 4K page being processed) is used to determine if the Read Page assumption was correct. If the Read Page assumption is confirmed, then when the page is selected for wiping, the page is wiped out simply by the ADV register bit entry and/or subsequent overwriting. There is no need to execute a FIG. 6 Swap Out in the meantime by write-back to the external memory. If the Read Page assumption is disconfirmed, then the page is written back to the external memory as described in connection with FIG. 6.

In FIG. 9, an SSM Dirty Bits Checker 2710 monitors each 4K page N in the Secure RAM and detects any write access to each respective page N. The status of each page N is flagged in the WR[N] bit of register WR. The status of each page N is cleared by the secure demand pager SDP circuitry by writing zeroes into that register WR either from circuit 2710 or from processor 1030 over bus 2745.

Some embodiments have write-back cache and other embodiments have write-through cache. Write-through cache may work somewhat more efficiently since an L2 (Level 2) cache can retain substantial amounts of data before a random cache line eviction happens in Write-back mode.

Next, various signal designators are used in connection with the SDP coupling to busses. The signal designators are composites build up from abbreviations and interpreted according to the following Glossary Table.

GLOSSARY TABLE

| ABBREVIATION | REMARKS (also subject to explanation in text) |
|---|---|
| A | Address |
| ADDR | Address |
| CLK | Clock |
| EN | Enable |
| I | Instruction (bus) |
| N | Page Number |
| PROT | Protected, Secure |
| R | Read |
| READY | Ready |
| RW | Read/Write |
| SEC | Secure |
| VALID | Valid |
| W | Write |
| WR | Write |

In FIG. 9, processor buses INST bus, DATA bus, and bus 2745 have signals READ_CHANNEL (data and instruction fetch load), and WRITE_CHANNEL (data write) signals. These signals are useful to SDP 1040, such as those signals listed below.

READ CHANNEL and WRITE CHANNEL:

| | |
|---|---|
| ACLK | Main Clock |
| ACLKEN | Used to divided the Main clock to create bus clock (generally we have core at 400 MHz and bus clock at 200 MHz) |

READ_CHANNEL:

| | |
|---|---|
| ARVALID | : When High the address on the bus is valid |
| ARPROT | : Indicates if this transaction is Secure/Public; User/Supervisor; Data/Opcode |
| ARADDR | : Address requested |

WRITE CHANNEL:

| | |
|---|---|
| AWVALID | : When High the address and data in the bus are valid |
| AWPROT | : Indicates if this transaction is Secure/public; User/Supervisor; Data/Opcode |
| AWADDR | : Address requested |

Some processor architectures, such as real Harvard architecture, have separate busses for Data Read; Data Write; and Instructions (Opcode Fetch). READY signals AWREADYRW, ARREADYRW, ARREADYI pertain to data-valid signals on different buses. ARREADYI is HIGH when a slave has answered or hand-shaked the read data, indicating data valid, on an Instruction bus to the RISC processor. ARREADYRW is HIGH when a slave has answered or hand-shaked the read data, indicating data valid, on a Data Read bus to the RISC processor. AWREADYI is HIGH when the write data on a Data Write bus is valid, indicating data valid, to a Slave. In various architectures, one bus may carry one, some or all of these types of data, and the appropriate ready signal(s) is provided.

The pages are aligned on a 4K bytes boundary. One embodiment example repeatedly operates on all of a set of pages N from 0 (0000 binary) to 15 (1111 binary) and concatenates the four bits representing a page number N (0 to 15) so that all sixteen page addresses PAGE_0_BASE_ADDR, PAGE_1_BASE_ADDR, ... PAGE_15_BASE_ADDR are loaded with a respective base address value START_SECRAM[31:16] concatenated with the four binary bits of index N as the offset from that base address and identifying each respective page N= 0, 1, ...15. Each of these base addresses are respectively designated PAGE_N_BASE_ADDR.

Next, the process generates the truth value of the following expression.
(AWVALIDRW=1 and AWREADYRW=1 and ACLKENIRW=1 and AWPROTRW[2] =0) .

If the expression is not true, then for N=0 to 15, a temporary register for holding information pertaining to each attempted page access has a respective bit zeroed PAGE_N_WR=0 for every page N.

If the expression is true, then for the accessed page number N, both the temporary register bit is set PAGE_N_WR=1 and the Dirty/Clean register bit for the accessed page is set WR[N]=1, provided PAGE_N_BASE_ADDR = AWADDRRW[31:12]. The temporary register bits PAGE_N_WR for all the other fifteen pages are zeroed.

In words, the SDP hardware 1040 monitors for the instance when not only the high 16 bits of PAGE_N_BASE_ADDR are equal to the high 16 bits of AWADDRRW[31:16], but also the next 4 page-specific bits of PAGE_N_BASE_ADDR are equal to the next 4 page-specific bits AWADDRRW[15:12] signifying the page to which PAGE_N_BASE_ADDR pertains. On Swap In, the high 16 bits are written to PA2VA of FIG. 4 and indexed by the next 4 page-specific bits. A match indicates a Write to Page N, which makes Page N Dirty. When a match happens, the Dirty/Clean register bit WR[N] pertaining to page N is set to one (1) (Dirty). The Dirty/Clean register WR is not modified at any other bit position at this time since Dirty indications for any other page should be remembered and not disturbed.

Third Process and structure area: Statistics on frequency of use of each page N are kept as 2-bit values designated STAT in registers 2740 of FIG. 9 and as depicted in FIGS. 10 and 11. These statistics are examples of prognostic registers or register values. STAT identifies which pages are used more frequently than others so that paging will be less likely to wipe out a more frequently used page. For example, when the coding represents a VERY LOW usage condition for a page, that page is a good candidate for wiping.

To conserve real estate, modulo 2 counters are used in an embodiment, as follows. In FIG. 9, a Usage Level Encoder in Usage Level Builder 2720 encodes Page Counter values according to TABLE 3 so that each of the values is tiered and loaded into a modulo 2 two bit counter called STAT.

TABLE 3 shows how the page counter values are compressed into STAT 2-bit values. In this example, and without limitation, sixteen 4K pages N have their two bit statistics recorded in sixteen two-bit entries in a 32-bit STAT register STAT [31:0]. Each two bit entry is designated as STAT [2N+1; 2N] for page number N running from 0 to 15.

TABLE 3 STATISTICS CONVERSION

| PAGE N ACCESS COUNTER RANGE | STAT[2N+1;2N] ENCODED VALUE | USAGE LEVEL MEANING |
| --- | --- | --- |
| 0 | 00 | VERY LOW |
| 1 to 47 | 01 | LOW |
| 48 to 95 | 10 | MEDIUM |
| 96 to 127 | 11 | HIGH |

Note that variation of the boundaries like 48 and 96 is readily made in various embodiments. Ranges of variation for the low boundary (0, 1, 48, 96 in TABLE 3) of each Usage Level are essentially as low or as high as the counter range, depending on the selection by the skilled worker. The high boundary (0, 47, 95) is set one less than the low boundary of the next higher Usage Level, so that all possible counter values are assigned to some Usage Level.

The number of Usage Levels, when used, are suitably at least two, without an upper limitation of number of Usage Levels, and ordinarily less than nine for inexpensive circuitry. In this example, four Usage Levels were adopted.

The highest counter value (e.g., 127 here) suitably has no upper limit, but most applications will empirically have some counter value below which a predetermined percentage (e.g., 90% for upper counter value being one less than a power-of-two) of processor runs lie. The highest counter value can be increased or decreased according to the number of pages available for SDP in the internal Secure RAM. Then, the counter is suitably established to have that counting capacity. If the counter does reach its hardware upper limit, the counter suitably is made to saturate (remain at the upper limit) rather than rolling over to zero, to avoid confusing Usage Levels with each other. For most implementations, a counter capacity between 31 and 1023 appears practical and/or sufficient.

The Usage Levels in this example, divide the Usage Level lower count boundary (e.g., 0, 1, 48, 96) so that all but the lowest Usage Level divide the counter range so that some ranges are approximately equal (here, two ranges are 48 counts wide). Other embodiments set the ranges differently. One way is setting some of the upper or lower range boundaries logarithmically-such as approximately 1, 4, 16, 64. Another approach uses 0, 32, 64, 96, or some of those values, and directly loads the two MSB bits of the counter as a Usage Level to register STAT.

Another embodiment determines the ranges to improve execution of known software applications by empirical testing beforehand and then configures the Usage Level Encoder with the empirically determined ranges prior to use. Still another embodiment in effect does the empirical testing in the field and dynamically learns as the applications actually execute in use in the field, and then adjusts the boundaries to cause the wiping Advice to keep the execution time and power dissipation very low.

The counting operations help avoid prematurely swapping out a newly swapped-in page. Swap is executed when a page fault occurs, which means an attempted access is made to a missing page. SDP software uses Page Wiping Advisor 2730, in the hardware of FIG. 9 added to Secure State Machine SSM, to identify a page slot when the space in Secure RAM for physical pages is full, and in some embodiments under other conditions as well. If the old page in the identified page slot has been modified, SDP securely swaps out the old page as shown in FIGS. 4, 6, 7 and 8. Then SDP software swaps in a new page in secure mode as shown in FIGS. 4, 5, 7 and 8, and thereby replaces the old page in the page slot.

Some embodiments have control software to activate access and respond to the SDP hardware of FIG. 9. In some embodiments, that control software is suitably provided as a space-efficient software component in Secure ROM that is patch updatable via a signed Primary Protected Application. See coassigned, co-filed application U.S. non-provisional patent application TI-38213 "Methods, Apparatus, and Systems for Secure Demand Paging and Other Paging Operations for Processor Devices".

Registers 2740 has WR register used in conjunction with page access counters 2845 of FIG. 10 and 11, to determine when Page slots with a page currently mapped are Dirty (modified in Secure RAM after Swap In). Often, the Swap In occurs, but with Swap Out of the old page from the slot being omitted. Swap Out is omitted, for instance, for old code pages when self modifying code is not used. The virtual slots (where potential physical pages can be mapped) might change one time for code, and that is when the code is loaded.

For a Clean page, the Dirty/Clean WR register information provides a preventive signal to bypass Swap Out and thereby save and avoid the cost of a Swap Out to wipe or steal that page. Then a Swap In is performed into the Page slot occupied by the no-longer-needed Clean page. In other words, Swap In from DRAM of a new page to be accessed writes over an old Clean page residing in a page slot identified by Page Wiping Advisor 2730. Time and processing power are efficiently used in this process embodiment by Swapping Out a page selected for wiping specifically when that page is dirty, prior to the subsequent Swap In of a new page.

The data for a secure environment is found to be much smaller in space occupancy than code for many secure applications. Some secure applications like DRM (Digital Rights Management) do use substantial amounts not only of secure code but also secure data such as encrypted data received into non-secure DRAM. The secure environment decrypts encrypted data and puts the resulting decrypted data back into DRAM while keeping the much smaller amount of data represented by key(s) and/or base certificate structure for the DRM in the secure environment. Selective control to Swap Out a page selected for wiping specifically when that page is Dirty, and to apply a bypass control around Swap Out when the wiped page was Clean, still saves time and processing power.

Then the page fault error status is released and an access on the previously missing page occurs and is completed, since that page is now swapped in. The SDP hardware of FIG. 9, when receiving an access, updates its internal counter corresponding to this page with the highest value (e.g., 127), which ranks the page HIGH and consequently this page is given the last or lowest priority to be wiped out at this point.

The third process and structure area builds statistical information of usage of each page in order to help the SDP Page Wiping Advisor 2730 to choose the right page to wipe out. The statistical information helps avoid wiping out pages that are currently in use or being used more than the appropriate page to wipe out, all other things being equal.

The Usage Level Builder 2720 builds a Usage Level of each page by detecting any read or write access occurring on each page. Some embodiments do not differentiate a burst access from a single access for this detection operation. The SSM sends the access detection to Usage Level Builder 2720. Usage Level Builder 2720 outputs, for example, two (2) bits of statistical information that is encoded based on TABLE 3 to statistics register STAT. Statistics register STAT is accessible to the SDP (secure demand pager) software executing on RISC processor 1030 or other processor.

Note that the statistical information provided by the STAT register may not always be precisely accurate due to a high amount of cache hits that might occur in an L2 cache in some cache architecture. However, the information is indicative and sufficiently accurate for the SDP.

In FIG. 9, the SSM Usage Level Builder 2720 has a set of Page Access Counters 2845 of FIGS. 10 and 11. Those counters include, for example, a seven (7) bit counter (0-127) for each 4K bytes page N. When page N is accessed, the respective Nth page counter is set to 127, and all other page counters are decremented by one. In operation, the counters of the currently accessed pages have higher count values closer or nearer to 127, and no-longer-used pages have counter values close to zero.

In other words, the Page Access Counters 2845, in effect, keep a reverse count of non-uses of each page by decrementing down so that a more-unused page has a lower counter value, in one example, than a less-unused page. In this way both recency of access and frequency of use work together, for a page that should not be wiped, to keep the counter value high.

The counters are reset by resetting the particular Page Access Counter in counters 2845 that pertains to the particular page slot that is wiped at any given time. That particular Page Access Counter is reset to 127 (all ones), for example, and the corresponding STAT register bit pair is reset to "11" (HIGH) for the particular physical page slot that is wiped. The counts for other pages need not be reset since those counts still are meaningful. For example, another little-used page that has achieved a count that has been repeatedly decremented down a low value, and wherein that page has not yet been wiped, need not have its Page Access Counter value reset to 127 when some other little-used page has just been wiped.

Other embodiments suitably use the opposite end of the range and/or other policies to efficiently differentiate pages to wipe from pages not to wipe.

An alternative embodiment operates oppositely to that of TABLE 3, and sets the counter for page N to zero each time page N is accessed. The counters for all the other pages are incremented by one. The values of TABLE 3 are reversed in their meaning, and the results of operation are similar. Operations thus establish count values for recently accessed or more frequently used pages nearer to one end of the count range than count values for hardly-used pages.

Another alternative embodiment initializes the counters to zero and increments a counter pertaining to a page when that page is accessed to keep a statistic. Counters for pages that were not accessed have their values unchanged in this alternative. Elapsed time from a time-stamp time pertaining to the page is combined with the counter information to indicate frequency of use. Numbers representing tiers of elapsed time and tiers of counter values are suitably combined by logic to indicate frequency of use. A page that has recently been swapped into Secure RAM and therefore has few accesses is thus not automatically given a high priority for wiping just because its usage happens to be low. In other words, recency of entry of a new page is taken into account.

In some embodiments, when Secure RAM has empty page slots, the empty page slots are used as Swap In destinations before wiping and/or Swapping Out any currently resident pages.

The Page Access Counters 2845 are utilized for tracking code and data pages separately in some embodiments, to bump (i.e., increment or decrement) a respective counter for each page and page type. Some embodiments keep statistics of several counters, e.g., three (3) counters designated NEW, OLD, and OLDER. On each page fault, the three aged counters are updated on a per virtual address slot basis. Counter NEW holds the latest count. Counter OLD gets an old copy of counter NEW. Counter OLDER gets an older copy of counter NEW. In another embodiment, a weighting system is applied to the three aged counters for dynamically adjusting operations of the page wiping adviser. Some embodiments provide such counters representing separate ranges of age of page since last access.

Some embodiments provide additional bits to signify saturation and/or roll-over of the counter, and an interrupt is suitably supplied to RISC processor 1030 to signal such condition. The SDP hardware 1040 generates an interrupt each time a page access counter reaches zero (0), and does not wait for the application program running in SDP to generate a page fault and then servicing the page fault. A process determines which new page to import such as by loading a page that is adjacent in virtual address space to a currently-loaded high usage page, pre-decoding from an instruction queue, or other appropriate new page identification mechanism.

Interrupt architecture for SDP hardware 1040 thereby obviates continual statistics management monitoring or polling by RISC processor 1030 (also called tight coupling). A still further variant of the aged-counters approach utilizes a secure timer interrupt, in secure mode when SDP is in use, to vary frequency of reading the three aged counters. Thus, a variety of interrupt based SDP embodiments of hardware 1040 are contemplated as well as polling embodiments.

A statistics register for each virtual page slot can be provided in some embodiments because the virtual slots (in secure virtual memory) are the relevant address space to operations of applications code. In other embodiments, Page Access Counters 2845 are kept low in number by having them correspond to the secure RAM physical pages, which map to any virtual slot in general. Also, a single counter circuit here coupled to several count value registers helps keep real estate small.

Even though the virtual slots are the relevant address space to the application, the physical page hardware statistics are nevertheless efficiently maintained in some embodiments on a physical page-slot by page-slot basis. This approach represents and handles a lot of data when the virtual address space is very large without need of a statistics register for each virtual page slot. In this physical page statistics approach, physical pages are accessed if mapped into some page slot of the virtual address space. The status registers need only track the much smaller number of physical pages.

The Page Access Counters 2845 pertain to each physical page in FIG. 10. The SSM monitors the physical bus and SSM need not be coupled to the MMU mapping. Page Access Counters 2845 ranks the usage of the physical page slot in Secure RAM in order to determine that type (Clean, read; or Dirty, write) and Usage Level of the page by SSM tracking each access going to from MPU to Secure RAM.

In FIG. 4, SDP Manager uses virtual memory contexts VMC to context-associate the physical pages to the much larger number of virtual slots and maintain their relevance and association on a per page-slot basis in the virtual address space. Put another way, the physical page statistics data is instanced to a context (VMC) which is associated to each virtual slot where a physical page, at some point in time, is or has been mapped, and tracked physically what occurred to that physical page, but only while mapped into that slot. When the physical page is wiped and/or Swapped Out, such as to free physical space for a new page, the physical statistics counters are cleared, as described hereinabove, because they are no longer relevant to where the page is newly mapped into the virtual address space. New counts are then added to statistics maintained on a virtual slot basis. Suppose the page wiping adviser circuitry makes decisions based upon what the application does in the virtual address space, and not the physical address space. The physical address space is irrelevant to operations of the application over a longer period of time wherein the physical pages have been dynamically reassigned to many virtual address slots over that longer period of time.

The application program micro-operational read/writes to memory are thus tracked by physical page of Secure RAM. Suppose the scavenging decision to wipe a page is based upon virtual page slots (4k each) comprising the entire virtual memory space. Therefore, in the aged counters approach, each page slot (4k) is associated with three different aged counters. Each DRAM backing page, in effect, is supported by these counters, because a linear one to one mapping (an array) relates DRAM backing pages to slots in the virtual address space and thus reduces complexity. Those counters are suitably kept and maintained encrypted in the non-secure DRAM, as part of the other DRAM backing page statistics.

Another category of embodiments considers in a greater SDP context the history of what an application program accesses in the larger virtual address space. For these embodiments, the history in virtual address space is regarded as more important than what the application does in the physical address space (pages mapped into slots of the virtual) when relating to scavenging operations. A page that has not been dirtied (modified) since the last Swap Out of data in the virtual slot where that page is currently mapped is a more efficient candidate for stealing than a dirty page. Statistics maintained on access to a given physical page are important, when related to the context of where the physical page is mapped into the virtual address space. That is because the applications actions/accesses with its underlying memory are in the virtual address space, not the physical space which is being used dynamically in a time-sliced manner to create the larger virtual address space. Therefore, if hardware like that of FIG. 9 monitors accesses to physical pages to produce its statistics, a further variation keeps and relates the statistics on physical pages in the larger context of information relating to the virtual address space. Accordingly, before the page is wiped or stolen and moved to a different supporting virtual address slot, the information is retrieved from hardware statistics register STAT and saved into a software maintained statistics data structure that is indexed based on the related and corresponding virtual address slot that produced the statistics data.

Returning to the physical page approach of FIG. 9, in order to ensure that the counters are not corrupted by the SDP software which may be resident in Secure RAM, the secure registers 2740 include a page activity register ACT.

This page activity register ACT allows disabling of usage level monitoring for any page of the page pool as described next.

TABLE 4: CODES SIGNIFYING ACTIVATION OF USAGE LEVEL MONITORING

| ACT[N] | DESCRIPTION |
|---|---|
| 0 | Usage Level Monitoring not activated |
| 1 | Usage Level Monitoring activated |

When ACT[N] is High (1), this page N is taken into account in updating Usage Level register STAT and Page Wiping Advisor register ADV.

In FIG. 9, the SSM Usage Level Builder 2720 handles the 7-bit page counters as follows.

The process generates the truth value for the following expression, pertaining to a Read bus, analogous to an expression from hereinabove:

(ARVALIDRW=1 and ARREADYRW=1 and ACLKENIRW=1 and ARPROTRW[2]=0).

If the expression is not true, then for N=0 to 15, each respective read bit is zeroed in another temporary register PAGE_N_RD=0.

If the expression is true, then for each page number N, those temporary register bits are respectively zeroed except for setting PAGE_N_RD=1, meaning the temporary register bit pertaining to the page N that was read. Determining which page N was read is determined by finding the N that produces a match PAGE_N_BASE_ADDR = ARADDRRW [31:12]. On Swap In, the high 16 bits are written to PA2VA of FIG. 4 and indexed by the next 4 page-specific bits. This indication PAGE_N_RD=1 is useful for adjusting the corresponding Page Access Counter in counters 2845 by indicating that the page N has this additional instance of being used.

Notice that the process is repeated analogously to the process from hereinabove except that a Read bus is involved instead of a Write bus. "AR" instead of "AW" is the letter pair prefixed to additional variables involving Valid, Ready, and Protected.

Next for each page N from 0 to top page, the process generates the truth value for the following expression, for an Instruction bus, analogous to an expression from hereinabove:

(ARVALIDI=1 and ARREADYI=1 and ACLYENIRW=1 and ARPROTI[2]=0).

If the expression is not true, then for N=0 to 15, in another temporary register each respective page bit PAGE_N_I is zeroed. (PAGE_N_I=0).

If the expression is true, then for the accessed page number N, both the temporary register bit is set to one PAGE_N_I=1 and the TYPE register bit for the accessed page is set TYPE[N]=1, provided PAGE_N_BASE_ADDR = ARADDRI[31:12]. On Swap In, the high 16 bits are written to PA2VA of FIG. 4 and indexed by the next 4 page-specific bits. The temporary register bits PAGE_N_I for all the other fifteen pages are zeroed.

In words, the SDP hardware 1040 monitors for the instance when not only the high 16 bits of PAGE_N_BASE_ADDR are equal to the high 16 bits of ARADDRI[31:16] on the Instruction bus, but also the next 4 page-specific bits of PAGE_N_BASE_ADDR are equal to the next 4 page-specific bits ARADDRI [15:12] signifying the page to which PAGE_N_BASE_ADDR pertains. A match indicates a Write to Page N, which makes Page N a Code page. When a match happens, the TYPE register bit TYPE[N] pertaining to page N is set to one (1) (Code Page). The TYPE register is not modified at any other bit position at this time since current Type indications for any other page should be remembered and not disturbed.

The process just above is repeated analogously to the process from hereinabove except that PAGE_N_I and TYPE register are involved instead of WR[N], and "I" for Instruction bus instead of "RW" is the suffix in further additional variables involving Valid, Ready, and Protected.

The activated pages are prevented from being corrupted by accesses to not-activated pages by virtue of a respective access-valid register bit PAGE_N_ACCESS_VALID for each page N. Specifically, for each respective page N, that access-valid register bit is generated as follows:

PAGE_N_ACCESS_VALID = (PAGE_N_WR OR PAGE_N_RD OR PAGE_N_I) AND ACT [N] .

Note that letter "N" represents a page index in each of the five register bits of the above equation.

Next, if PAGE_N_ACCESS_VALID is valid for any page (determined by OR-ing the access-valid register bits for all pages), then the page counter for the page N for which access is valid is set to 127, and all other page counters are decremented by one or maintained zero if already zero. In this way, even a single isolated instance of a page access is sufficient to confer a HIGH Usage Level to the page for a while.

Some other embodiments instead add a predetermined value to the page counter for page N. For example, the predetermined value can be equal to half the counter range or some other value. The page counter is structured to saturate at 127 and not roll over if the result of the addition exceeds the high end value (e.g., 127). In this way, more than a single isolated instance of a page access is applied to regain the HIGH Usage Level.

The SSM Usage Level Builder 2720 of FIG. 9 encodes the page counters according to TABLE 3. The page counters for all pages are updated as described for each time an access occurs on one of the activated pages. Also, the statistics STAT value STAT for a respective page is updated for each time an access occurs on one of the activated pages.

Fourth process and structure area. The fourth process and structure area computes from the first, second, and third process and structure area results to determine which page N to wipe out. The result of the fourth process and structure area is accessible by the secure demand pager SDP via the secure register ADV according to TABLE 5.

TABLE 5: CODES SIGNIFYING RECOMMENDATION TO WIPE A PAGE

| ADV[N] | DESCRIPTION |
|---|---|
| 0 | Page N must not be wiped out |
| 1 | Page N should be wiped out. |

When only one single bit ADV[N] is High, then page N has been identified to be the best choice for wiping. Note that the ADV register can have more than one bit high at a time as described next hereinbelow. Also, when no ADV bits are high, such as when every page has High Usage Level and low priority for wiping, then the SDP randomly or otherwise appropriately selects a page for wiping.

When the various registers ACT, TYPE, WR, STAT, and ADV are reset, such as on power up, warm reset, or new Virtual Machine Context (VMC), all the bits in those five registers are suitably reset to zero. Those five registers are suitably provided as secure registers protected by SSM, and a Secure Supervisor program is used to access those registers ACT, TYPE, WR, STAT and ADV in Secure Mode.

In FIG. 10, the coding concatenates STAT[2N+1:2N] & TYPE[N] & WR[N] to create a Concatenation Case Table 2850 having row entries for each page N. A design code case statement involving this concatenation is also represented by the expression

$$\text{CASE STAT[2N+1:2N] \& TYPE[N] \& WR[N]}$$

A row entry in this example has four bits entered therein. In other embodiments, more or fewer bits with various selected meanings are suitably used in an analogous way. For example, if a Page has a row 4 entry "1001" in Concatenation Case Table 2850, it means that Page 4 is characterized by {"10"- MEDIUM usage, "0" - Data Page, "1" - Dirty Page}. For a second example, if a Page has a row 5 entry 0110 in Concatenation Case Table 2850, it means that Page 5 is characterized by {"01" LOW usage, "1" - Code Page, "0" - Clean Page}. The Concatenation Case Table 2850 is suitably regarded as a collective designation for the STAT, TYPE, and WR registers in some embodiments; it can be a separate physical table in other embodiments.

The Page Access Counter(s) 2845 supplies an identification of an applicable one of a plurality of usage ranges called Usage Levels (VERY LOW, LOW, MEDIUM, HIGH) in which the usage from the Page Access Counter lies to form the Usage Level bits according to TABLE 3 for the STAT register in Concatenation Case Table 2850.

In FIG. 10, the Concatenation Case Table 2850 is then converted to a 9-bit field by table lookup from TABLE 6 or by conversion logic implementing TABLE 6 directly to supply each entry to a Priority Sorting Page 2860.

TABLE 6 ENCODINGS FOR PRIORITY 9-BIT FIELD

| CONCATENATION STAT/TYPE/WR | PRIORITY VARIABLE PRIORITY_SORTING_PAGE | 9-BIT MEANING |
|---|---|---|
| 0010 | 000000001 | CODE page, VERY LOW usage |
| 0110 | 000000010 | CODE page, LOW usage |
| 0000 | 000000100 | DATA READ page, VERY LOW usage |
| 0100 | 000001000 | DATA READ page, LOW usage |
| 0001 | 000010000 | DATA WRITE page, VERY LOW usage |
| 0101 | 000100000 | DATA WRITE page, LOW usage |
| 1010 | 001000000 | CODE page, MEDIUM usage |
| 1000 | 010000000 | DATA READ page, MEDIUM usage |
| 1001 | 100000000 | DATA WRITE page, MEDIUM usage |
| 11xx | 000000000 | Page should not be wiped out |

(continued)

| CONCATENATION STAT/TYPE/WR | PRIORITY VARIABLE PRIORITY_SORTING_PAGE | 9-BIT MEANING |
|---|---|---|
| xx11 | N/A | N/A, Not used where code page is read only |

For example, a Code page with Very Low usage has the highest priority for wiping and all other items have decreasing priority in order of their listing. A Data Write page is a Dirty page, which is lower in priority than other pages, other things equal. This is because the Dirty page, if selected for wiping, is Swapped Out, and SDP Swap Out involves overhead of Encryption and Hash for security which can be sometimes avoided by setting the priority lower.

The TABLE 6 conversion assigns a higher page priority for wiping to a page that is unmodified (Clean) than to a page that has been written (Dirty), other things equal. A higher page priority for wiping is assigned to a code page than a data page, other things equal. A higher page priority for wiping is assigned to a lower usage page than a higher Usage Level page (see STAT register TABLE 3), other things equal.

A 9-bit page priority for wiping is assigned in operations according to TABLE 6. The TABLE 6 priorities represent that, for at least one Usage Level of TABLE 3, a code page in that Usage Level has a higher priority than an unmodified data page in the next lower Usage Level. For example, a CODE page with LOW usage has a higher priority than a DATA READ page with VERY LOW usage. In the example of this paragraph, this prioritization is established mainly because there is an uncertainty on a DATA READ page that can become WRITE after a writeback drain and cache flush. By contrast, pages identified CODE are sure not to become a DATA WRITE page in this example wherein an assumption of no-modification to code pages is established.

Similarly, a page priority for wiping is assigned wherein for at least one Usage Level, an unmodified data page in that Usage Level has a higher priority than a written data page in the next lower Usage Level. For example a DATA READ page with LOW usage has a higher priority than a DATA WRITE page with VERY LOW usage.

Different embodiments suitably provide other types of priority codings or representations, such as binary, binary-coded-decimal, etc. than the 9-bit singleton-one position-coded priority (or its complement) shown in the example of TABLE 6, even if the listed hierarchy of tabulated MEANINGS remains the same. In still other contemplated embodiments, the hierarchy of MEANING is revised to establish other practically useful priority orderings and more or fewer priority codes depending on experience with different numbers of Usage Levels, Types, Dirty/Clean conditions, and fewer or additional such variables.

In FIGS. 9 and 10, the ADV register has a respective bit set high corresponding to each of the pages that have hit the highest priority (000000001) in the sorting scheme of TABLE 6. Thus, the ADV register may have more than one bit set high for pages that all have the same priority level (i.e, all zero or all four). The SDP mechanism consequently chooses the page that is the most suitable for its internal processing without any added distinction required. In such case SDP suitably is arranged to randomly select one Page, for instance, or perform a predetermined selection (e.g., choose highest 4-bit physical page number N) implemented in an inexpensive circuit structure.

In FIG. 9 a Page Wiping Advisor 2730 is suitably provided as represented by hardware and operations on a Priority Sorting Page 2860 of FIG. 10 as follows:

For each page N, enter a respective 9-bit value of PRIORITY_SORTING_PAGE_N[8:0] as follows.
If page activity ACT[N] is zero, then set PRIORITY_SORTING_PAGE_N[8:0] to zero for that page N.
If page activity ACT[N] is one, then set PRIORITY_SORTING_PAGE_N[8:0] to the nine-bit value from TABLE 6 representing the page Type TYPE[N], Dirty status WR[N], and its Usage Level STAT [N] .

Next, the process considers each of the bit-columns of Priority Sorting Page 2860 in FIG. 10. For example, nine such bit-columns are indexed from column zero (0) high wiping priority on right to column 8 low wiping priority on left. In other words, column zero (0) represents "CODE page, VERY LOW usage, the highest priority for wiping in TABLE 6 if a one (1) entry is in column zero (0). Columns 1, 2, 3, ...8 in Priority Sorting Page 2860 respectively have the successively lower priority Meanings tabulated vertically in TABLE 6 down to low priority 8 "DATA WRITE page, MEDIUM usage. A singleton one (1) is entered in page-specific rows of Priority Sorting Page 2860 to represent the priority assigned to each active physical page that has less than HIGH Usage Level in Secure RAM 1034 governed by SDP.

Priority Result 2870 is loaded with OR-bits in the following manner. The bits entered in a given column of Priority Sorting Page 2860 are fed to an OR-gate or OR-process. These bits in a given column of Priority Sorting Page 2860 correspond to the pages from 0 to total number N. Priority Sorting Page 2860 is a N-by-9 array or data structure in this example. The OR operation is performed on each of the nine columns of Priority Sorting Page 2860 to supply nine (9) bits to Priority Result 2870 of FIG. 10 as represented by design pseudocode here:

PRIORITY_RESULT[0] = PRIORITY_SORTING_PAGE_0[0] OR... OR... OR PRIORITY_SORTING_PAGE_N[0]

PRIORITY_RESULT[8] = PRIORITY_SORTING_PAGE_0[8] OR... OR... OR PRIORITY_SORTING_PAGE_N[8]

Next, for each page N, the process successively looks right-to-left by an IF..ELSE IF...ELSE IF successively-conditional sifting structure and procedure (in CAPS hereinbelow) for the highest priority value (right-most one) for which PRIORITY_RESULT[] 2870 is a one. This successively-conditional procedure moves column-wise in Priority Result 2870 from right to left. As soon as the first "one" (1) is found, which is the right-most one, the process pseudocode hereinbelow loads register ADV and falls through to completion. This right-most one in Priority Result 2870 one identifies corresponding column 2875 of Priority Sorting Page 2860. Column 2875 is significant for determining which page to wipe. The process loads the entire column 2875 of Priority Sorting Page 2860 into the Page Wiping Advice register ADV 2880 to establish the wiping advice bit entries in register ADV.

The Page Wiping Advice register ADV is thus loaded by design pseuodocode hereinbelow by concatenation of PRIORITY_SORTING_PAGE 2870 bits (pertaining to all the physical pages) in column 2875 based on that highest priority right-most one position detected in Priority Result 2870. If the successive procedure fails to find a PRIORITY_ RESULT bit active (1) for any of the priorities from 0 to 8, then operations load register ADV with all zeroes, and also zero a default bit named OTHERS.

```
IF PRIORITY_RESULT[0] = 1 THEN
      ADV=PRIORITY_SORTING_PAGE_0[0] &....
                        &... & PRIORITY_SORTING_PAGE_N[0]
ELSE IF PRIORITY_RESULT[1] = 1 THEN
      ADV=PRIORITY_SORTING_PAGE_0[1] &...
                        &... & PRIORITY_SORTING_PAGE_N[1]
ELSE IF PRIORITY_RESULT[2] = 1 THEN
      ADV=PRIORITY_SORTING_PAGE_0[2] &...
                        &... & PRIORITY_SORTING_PAGE_N[2]
...
ELSE IF PRIORITY_RESULT[8] = 1 THEN
      ADV=PRIORITY_SORTING_PAGE_0 [8] &...
                        &... & PRIORITY_SORTING_PAGE_N[8]
ELSE ADV <= 0;
      OTHERS <= 0;
ENDIF;
```

In TABLE 6 and FIG. 10, the nine bit Priority field has nine bits for singleton one positions in this example because conceptually multiplying three times three is nine. The first conceptual "three" pertains to the number of types T of pages for TYPE[N] concatenated with WR[N]. In this example, the types of pages are 1) 10-Code Page, 2) 00-Data Read Page, and 3) 01-Data Write Page. Data Read does not necessarily mean a read-only limitation, just a page that has not been written (Clean) while in Secure RAM. The second "three" pertains to three levels of Statistics STAT other than HIGH. Those three lower STAT levels are 1-Very Low, 2-Low, and 3-Medium.

In general, "L-1" (L minus one) is the number of Usage Levels represented in the Statistics register STAT less one for the highest Usage Level. High usage pages get all-zeroes. Thus, the number of bits in each row of the Priority Sorting Page 2860 is the product of multiplication (L-1)[(2^(T+W))-1], where T is the number of bits in the Type register TYPE, and W is the number of bits in the Write or Dirty register WR. "^" means "raised-to-the-power." In this example wherein L is 4, T is one, and W is one, the number of bits in each row of Priority Sorting Page 2860 is nine.

In FIG. 10, each row of the Priority Sorting Page 2860 has nine bits among which is a singleton one, except all-zeroes for HIGH Usage Level pages and inactivated pages (ACT[N]=0). The singleton one can occupy any one of the nine bit positions, depending on the result from the Concatenation Case Table 2850. Nine zeroes (all-zeroes) in a row of the Priority Sorting Page 2860 means that a page is present (valid) and should not be wiped because usage is HIGH, or that a particular page N is not present (not valid, ACT[N]=0) in Secure RAM page space.

STEP TWO processes the Priority Sorting Page 2860 by doing a Boolean-OR on the bits in each column of Priority Sorting Page 2860. All the bits are ORed from the first column and the result is put in a corresponding first cell of a Priority Result vector 2870. Similarly, all the bits are ORed from the second column of Priority Sorting Page 2860 and the result in put in the second cell of Priority Result vector 2870, and so one until all nine cells of Priority Result vector 2870 are determined.

STEP THREE detects the position R of the cell having the right-most one in the Priority Result vector 2870.

STEP FOUR then outputs a column 2875 of the Priority Sorting Page 2860 that has the same position R as the rightmost one cell position detected in STEP THREE. Column 2875 of Priority Sorting Page 2860 is muxed out by a Mux 2878 and supplied to the Page Wiping Advice register ADV 2880. The bits in Priority Result 2870 constitute selector controls for the Mux 2878. The Mux 2878 has Nx9 inputs for the respective nine columns of Priority Sorting Page 2860. The Mux 2878 has an Nx1 output to couple the selected column to register ADV. In an alternative embodiment, the selected column (e.g., 2875) effectively acts as the Page Wiping Advice and is muxed directly to Page Selection Logic 2885.

In FIG. 10, Page Selection logic 2885 has an output that actually wipes a page from Secure RAM and/or loads a page to Secure RAM. Page Selection logic 2885 loads pages to Secure RAM as needed by the application until Secure RAM is full. Regardless of priority of existing pages in Secure RAM, in this example, if Secure RAM is not yet full, no existing pages are wiped since space remains for new pages to be loaded. When Secure RAM becomes full, then the Page Wiping Advice register 2880 contents are used. Page Wiping Advice register feeds Page Selection logic 2885. Each "one" in the Page Wiping Advice ADV 2880 signifies a page that can be wiped from a set of Pages 2890 currently residing in Secure RAM. Typically, there is just a single one (1) in the Page Wiping Advice ADV 2880. When Secure RAM is already full, then a single corresponding page is wiped from Pages 2890 in response to the "one" in the Page Wiping Advice ADV 2880.

Consider each interval in which the execution of the application runs during each interval by making read and write accesses to pages in Secure RAM without needing to load any new page from external memory. During each such interval, the Page Access Counter is continually updated with running counts of accesses respective to each Page[N]. Any instance of a write access to a page is used to update WR[N].

After Page Activity 2890 has been updated with each given instance of a page N being either loaded or wiped according to the Page Wiping Advice ADV 2880, then the STAT, TYPE, and WR registers (collectively, a Data register 2840) are updated. Page Access Counters 2845 is set to 127 in the particular counter corresponding to the new page. Register STAT is updated for each such new page from the Page Access Counters 2845 according to TABLE 3. Register TYPE is updated for the new page as Code or Data. Register WR is initially set to the Clean value respective to the new page. In some embodiments, the Concatenation Case Table 2850 is a separate structure and correspondingly updated, and in other embodiments, the registers STAT, TYPE and WR collectively constitute the Concatenation Case Table 2850 itself.

The Priority Sorting Page 2860 is also correspondingly updated, and the process of generating Priority Result 2870 and Page Wiping Advice ADV 2880 is repeated in this way continually to keep the Page Selection Logic 2885 fed with wiping advice from register ADV. In that way, upon a Load Page active input due to a page fault occurrence, Page Selection Logic 2885 readily identifies which page to wipe. Page Selection Logic 2885 keeps pages wiped currently, such as by updating the Page Active register 2890 with a zero or making an entry in an additional bit field in the Page Active register 2890 constituting a Page Wipe control register.

Then the SDP Swap Manager responds to the updated Page Wipe information. If the WR [N] bit is Dirty for the particular page N that is wiped, then a Swap Out operation is performed, otherwise if Clean, then no Swap Out operation. Then a Swap In operation gets the new page and loads it into the particular physical page slot N overwriting the page N that was wiped. Then Page Activity register 2890 is updated to indicate that the new page is active in page slot N.

Initialization is performed at the beginning of the process by clearing all of the data structures 2840, 2850, 2860, 2870, ADV 2880, 2890. Also, when the Secure RAM is being loaded in early phases of execution, as-yet unused page spaces in Secure RAM are available for incoming new pages being loaded according to FIG. 10. Prioritization from Page Wiping Advice is suitably ignored by Page Selection Logic 2885 until all the physical page slots of Secure RAM for data and code pages governed by SDP are full of physical pages.

When Secure RAM is full and a new page needs to be loaded, the secure demand paging mechanism chooses an existing page in Secure RAM for wiping that is the most suitable for its internal processing without any added distinction required. When Page Wiping Advice ADV register 2880 has two or more bits HIGH, the SDP mechanism of Page Selection Logic 2885 and/or SDP software in different embodiments takes the first page it sees set or takes a page randomly from among the pages with an ADV bit set to one. If all ADV bits are set to zero, the SDP mechanism of Page Selection Logic 2885 and/or SDP software in different embodiments takes the first page it sees set or takes a page randomly from among all the pages for which wiping is permitted. The SDP mechanism also benefits from information indicating that several pages can be replaced and can thus replace more than one page even if only one was requested.

Alternative embodiments use the following processes for multiple ones in ADV register 2880: 1) take first one, 2) take randomly, 3) resolve the tie by taking page with lowest page access counter 2845 value, 4) replace more than one page, 5) reserve one slot for DATA pages and a second slot for code pages, and 6) reserve respective slots for respective applications in a multi-threaded SDP. If the usage level is HIGH for all pages in Secure RAM it is also possible for all-zeroes to appear in ADV register 2880. A similar set of the just-listed process alternatives are used in various embodiments when all-zeroes appear in ADV register 2880.

To replace more than one page even if only one was requested, a program flow anticipation process suitably determines what page(s) to swap in since the request only identifies one such page. In this program flow anticipation process, when the SDP Page Selection Logic 2885 reads from SSM ADV register that 3 pages can wipe out, the SDP Page Selection Logic 2885 and/or SDP software replaces the first one page with the page requested and the two remaining pages with the two adjacent pages of the page requested. Other rules are suitably instantiated in the practice of various embodiments by modelizing the software behavior so as to leverage information identifying which data or code page is linked with another data or code page.

In embodiments that swap out more than one page at a time when appropriate, CPU bandwidth is advantageously saved by avoidance of a future page fault when a future page fault is otherwise likely, such as in the case of a secure process context switch.

Page access counters 2845 is an example of a page access table arrangement that has a page-specific entries. Each page-specific entry is set to an initial value by entry of a new page corresponding to that entry in the internal memory. That initial value can be 0 or top-of-range (e.g. 127) or some other value chosen for the purpose. The page-specific entry is reset to a value substantially approximating the initial value in response to a memory access to that page. In some embodiments, the entry is reset to the initial value itself, but some variation is permissible, suitable, and useful for performance. Further, the page-specific entry is changed in value by some amount in response to a memory access to a page other than the page corresponding to that entry. The change may be by a positive or negative amount, or by incrementing or decrementing, or by some random number within a range, and other variations for performance in various applications

The concatenation case table 2850 also has various forms in different embodiments. In one type of embodiment, the concatenation case table is suitably a compact array of storage elements having a layout much as shown in FIG. 10. In another embodiment, storage elements for Usage Level STAT, page Type TYPE, and page modified WR are scattered physically. In another embodiment, the page-specific Usage Level range for register STAT is simply derived by a coupling or a few logic gates coupled to the Page Access Counter to determine from high order bits what range or tier in which a given value of page access statistic lies. Thus, a separate storage element for the usage level may be absent, even though a given usage level is formed from the statistic.

The conversion circuit 2855 responds to the concatenation case table to generate a page priority code for each page. In some embodiments, conversion circuit 2855 generates a page priority code field having a singleton bit value accompanied by complement bit values, the singleton bit value having a position across the page priority code field representing page priority. Other priority codes are used in other embodiments.

Some embodiments include a priority sorting table 2875 as a physical structure accessible by the priority sorting circuit and holding the page priority code for each page generated by the conversion circuit 2855. The priority sorting circuit searches for at least one page priority code in the priority sorting table having a position of the singleton bit value having a position across the page priority field representing a highest page priority, and thereby identifying a page having that page priority code. When more than one page has the highest page priority, one of them is selected by some predetermined criterion such as first, last, highest or lowest, or randomly selected as the page to wipe from the pages having the highest page priority.

A right-most ones detector is but one example of a priority sorting circuit for identifying at least one page having a highest page priority. Depending on arrangement an extreme-ones detector such as either a right-most ones detector or a leftmost ones detector are suitable and yet other alternative approaches are used depending on the manner of representing the priority from the conversion circuit 2855.

In FIG. 11 another embodiment has a set of Page Access Counters 2845, and a Concatenation Case Table 2850 provided with STAT, TYPE, WR bits for each physical page in Secure RAM. A Page Identification Counter 2910 cycles through physical page identifying bits (e.g., 4 bits from 0000 through 1111 binary). Page Identification Counter 2910 provides these bits as selector controls to a 16:1 Mux 2920. Mux 2920 supplies Concatenation Case codes row-by-row, such as 10 0 1 from row for page 0 in the top row of Concatenation Case Table 2850.

A Priority Conversion circuit 2955 responds to each Concatenation Case code supplied by Mux 2920 and converts to a Priority Code such as the nine-bit codes of TABLE 6, or four-bit binary codes representing numbers from zero (0) to (9) decimal or otherwise as described herein.

Further, a Priority Maximum Detector 2970 is fed directly by the Priority Conversion circuit 2955. The Priority Maximum Detector 2970 finds the maximum Priority Code among the Priority codes (e.g. 16 of them) fed to Detector 2970 on the fly. Detector 2970 is any appropriate maximum detector circuit. One example of a Detector 2970 is an arithmetic subtractor circuit fed with successive Priority Codes, and subtractor output conditionally updating a temporary holding register when a new Priority Code arrives that is greater than any previous Priority Code fed to it in the cycle. Concurrently and conditionally, an associated temporary holding register is updated with the 4-bit page identification (Page ID) bits supplied by Page Identification Counter when each greatest new Priority Code arrives. The temporary holding register for Priority Code is fed back to the subtractor for comparison with succeeding incoming Priority codes. Comparing FIG. 10 with FIG. 11, note that the right-most one detection in FIG. 10 acts as a type of maximum detector of different structure.

When Page Identification Counter 2910 rolls over from 1111 to 0000 to begin a new cycle, the associated temporary holding register for Page ID is clocked to an output PAGE_ID_TO_WIPE which remains valid during the entire new cycle until updated.

Also, occurrence of roll-over to 0000 by the Page Identification Counter 2910 is fed to circuitry in Priority Maximum Detector 2970 to reset the temporary register for Priority Code so that the maximum is re-calculated on the new cycle. Thus, Priority Maximum Detector 2970 is cycled and reset by Page Identification Counter 2910, and Detector 2970 has a storage element to store the latest page identification having the highest page priority as conversion by Priority Conversion circuit 2955 proceeds through the various pages. The output PAGE_ID_TO_WIPE is suitably fed directly to the ACT register or to analogous control registers.

Note that Priority Maximum Detector 2970 automatically operates, in the particular subtractor example, to pick the first or last of multiple pages having the maximum Priority Code for wiping, if that circumstance occurs. If more than one page has the same highest priority value among all the pages, the Priority Maximum Detector 2970 simply stores the first page or last identification of a page tied with any other page having that highest priority value, depending on how the conditional output of the subtractor is arranged for greater-than-zero (picks first tied page), or greater-than-or-equal-to-zero (picks last tied page). Detector 2970 then returns that page identification as the page wiping advice PAGE_ ID TO WIPE.

In FIG. 11, supporting Page Selection Logic analogous to 2885 of FIG. 10 is provided as appropriate. Various types of page selection logic 2885 are suitably fed by the Priority Sorting Page 2860 for selecting a page in the memory to wipe. Page selection logic suitably has an input coupled to the activity register to override the page selection logic when there is an empty page slot in the memory. Another embodiment couples the page activity register 2890 to the conversion circuit 2855, and the conversion circuit 2855 assigns higher page priority for wiping to an empty page than an occupied page.

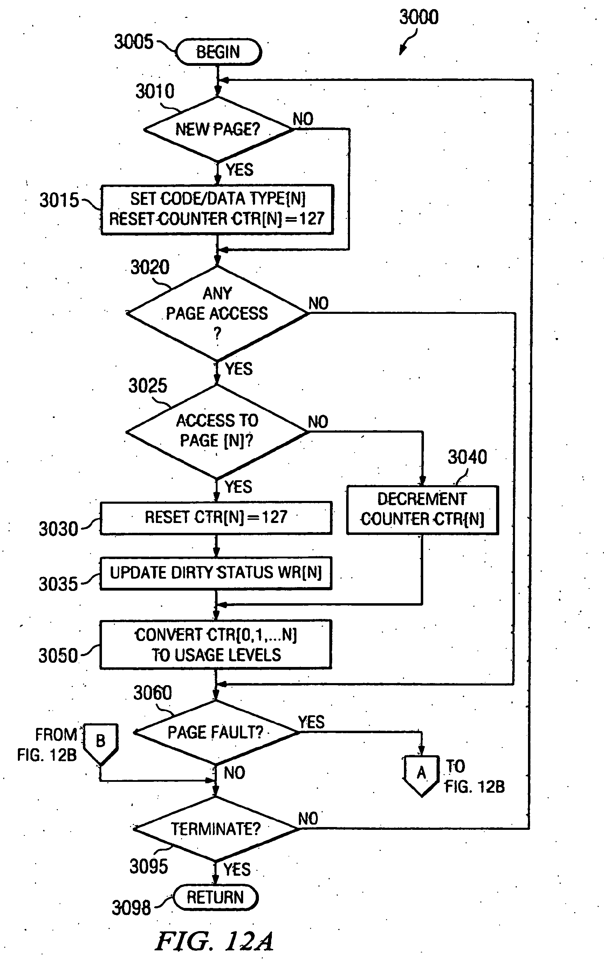

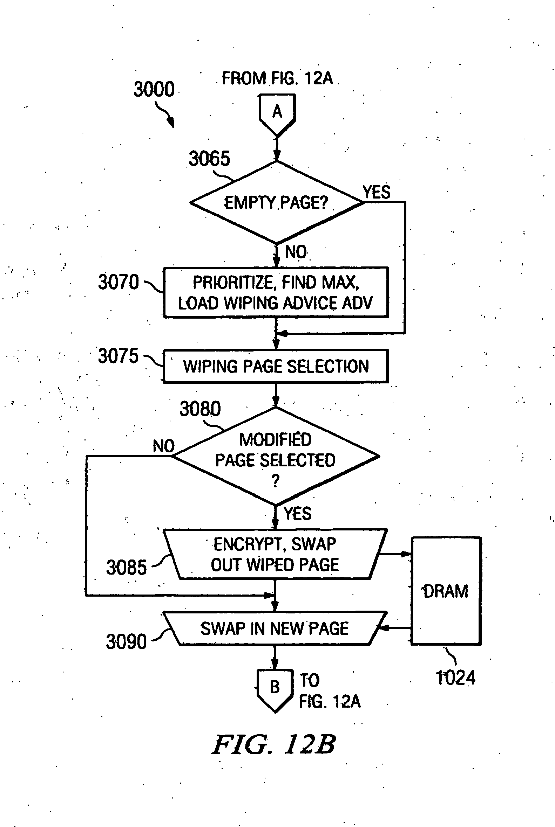

In FIGS. 12A and 12B, operational flow embodiment 3000 for aspects of FIGS. 9, 10, 11 and 13 commences operations with a BEGIN 3005 in FIG. 12A and proceeds to a decision step 3010 to determine if a New Page has been Swapped In to page slot [N]. By "New Page" is meant a page that has just previously been absent from Secure RAM 1034 whether or not that page was present in Secure RAM at some time in the past or has never been in Secure RAM at any time in the past. If so, then a step 3015 updates TYPE[N] for Code or Data page Type, and resets counter N to its initialization value (e.g., 127) in Page Access Counters 2845, and goes to a step 3020.

In decision step 3010, if no Swap In of a New Page is found, then operations go to a decision step 3020. Decision step 3020 determines whether a Read or Write access has just been made to a page in Secure RAM 1034. If so, then operations proceed to a decision step 3025 to determine whether for each given page N that the access was made to that page N. If the access was made to the given page N, then a step 3030 resets counter CTR[N] to (or increments approximately to) the initialization value (e.g., 127), and a succeeding step 3035 updates the register WR [N] to a Dirty state for page N in case of a Write access.

In step 3025, if the access was made to a page other than each given page N, then a step 3040 adjusts the counter CTR[N] such as by decrementing CTR[N]. Thus, page N has a corresponding counter N adjustment indicative of access, which is a sign of usage, and all the other pages have their respective counter values adjusted to indicate the non-access at this moment. In this way, counter statistics are progressively developed in Page Access Counters 2845.

After either of steps 3035 and 3040, a step 3050 converts and stores the statistics in all the counters CTR[0], CTR[1], ...CTR[N] into corresponding updated Usage Levels in register STAT in register 2740 of FIG. 9.

After either of steps 3050 and No from page access decision step 3020, operations proceed to a decision step 3060 to determine whether a Page Fault has occurred by an attempted access to a page that is absent from Secure RAM 1034. If not, operations loop back and ordinarily reach decision step 3010 to proceed with a new updating cycle.

Continuing the flow description in FIG. 12B, if a Page Fault has occurred (Yes) in step 3060 of FIG. 12A, then a decision step 3065 determines whether Secure RAM 1034 has any empty page slot into which a new page could be put. If no empty slot is detected in decision step 3065, then operations in a step 3070 prioritize for wiping the pages currently resident in Secure RAM 1034, find the page(s) having greatest priority for wiping, and load the Page Wiping Advice register ADV of FIG. 9.

Then a step 3075 selects a particular page N to wipe based on wiping advice bit in the register ADV, or by selection from two or more wiping advice bits that might have been set in register ADV, or selection from all the pages if no wiping advice bit was set in register ADV.

Next, a decision step 3080 determines if the page N selected in step 3075 is a modified page (WR[N]=1) If Yes in step 3080, then a step 3085 performs a cryptographic operation (such as encryption, hashing, or both) and Swaps Out the page N that is wiped. If page N is found to be a not-modified page in step 3080 or step 3085 has been reached and completed, then operations Swap In a New Page in a step 3090.

After the Swap In of step 3090 of FIG. 12B, or if there was no Page Fault detected in step 3060 of FIG. 12A, then operations go to a decision step 3095 in FIG. 12A to determine whether there is a circuit reset or other termination of operations. If not, then operations go back to step 3010 to do a new cycle of operation. If Yes, in step 3095, then operations go to RETURN 3098 and are thus complete.

STATIC AND DYNAMIC PHYSICAL PAGE ALLOCATION

In various embodiments, and in the same embodiment for different software applications, an optimum usage of pages can be established or selectively established by having an Allocation Ratio of Code pages to Data pages be within a predetermined range (statically established).

In still other embodiments the Allocation Ratio of Code pages is dynamically learned. The Allocation Ratio of Code pages to Data pages for allocating Secure RAM physical page space is suitably learned or determined given a limited number N of total secure memory pages. Determining the Allocation Ratio statically is either obviated or augmented in some embodiments that dynamically learn the ratio, in effect. Hybrid embodiments that determine the Allocation Ratio statically for some applications or purposes and dynamically for other applications or purposes are also contemplated.

The SDP mechanism generates the page selection from the behavior of the application software through an internally activated learning process of SDP that counts actual activity of data pages and code pages to thereby generate statistics to stabilize on the appropriate allocation ratio. In terms of memory organization that re-groups or allocates DATA or CODE pages, the ratio is learned or implicitly results from the activity by SDP register ADV 2880. For example, suppose the allocation ratio of Code page slots to Data page slots in Secure RAM is initialized at unity (1 Code page per 1 Data page). Further suppose that the particular application is swapping in Code pages at the rate of 2:1 (two Code pages swapped in for every one Data page).

Then the SDP mechanism in one embodiment increments the number of page slots in Secure RAM allocated to Code pages by one, and decrements the number of page slots allocated to Data pages by one. Limits are imposed so that there is always a minimum number of at least one or two Code pages and at least one or two Data pages to set limits on the range of the allocation and always include both Code or Data pages in the SDP process.

Suppose the particular application continues to be swapping the Code pages at a higher Swapping Ratio to Data pages than the Allocation Ratio of Code Slots divided by Data Slots established by SDP for Secure RAM. Then the Allocation Ratio would be continually altered to increase the allocation ratio by increasing page slots allocated for Code pages and decrementing the number of page slots allocated for Data pages. At some point, the process would settle at a point wherein the Swapping Ratio equals the Allocation Ratio. In this embodiment the pseudocode might provide after, S number of swaps updating Code and Data swap statistics for instance:

```
        IF SWAP_RATIO - ALLOCATION_RATIO > EPSILON
     THEN CODE_SLOTS <= CODE_SLOTS + 1
          DATA_SLOTS <= DATA_SLOTS - 1
ELSE IF ALLOCATION_RATIO - SWAP_RATIO > EPSILON
THEN CODE_SLOTS <= CODE_SLOTS - 1
          DATA_SLOTS <= DATA_SLOTS + 1;
```

Feedback in the above process drives the Allocation Ratio to be approximately equal to the Swap Ratio. The Allocation Ratio is changed by changing the number of CODE_SLOTS and DATA_SLOTS, which always sum to the available number of physical page slots in Secure RAM. Then the Swap Ratio changes in a complex way, partly in response to the change in Allocation Ratio and partly in response to the structure of the area of current execution in the application program. Even though the behavior and dependencies are complex, the dynamic learning feedback process accommodates this complexity. The value EPSILON is set at a predetermined amount such as 0.2 to reduce hunting near a settling point Swap Ratio equal to Allocation Ratio by the learning feedback loop. In actual execution of an application program, a continual adaptation by the dynamic learning feedback process is provided whether a settling point exists or not. Thus, the SDP register ADV 2880, and the process that drives it, not only chooses page locations to wipe but also dynamically evolves a ratio of Code pages to Data pages in Secure RAM.

Limits are placed on the increments and decrements so that at least one slot for a Code page and at least one slot for a Data Page are allocated in Secure RAM. In this way, Swap is always possible for either type of page.

Pre-existing applications software is suitably used as is, or prepared for use, with the SDP governed Secure RAM space. For instance, software-generating methods used to prepare the application program suitably size-control the program loops to reduce the number of repetitions of loops that cycle through more virtual pages than are likely to be allocated in Secure RAM space for the loops. Big multi-page loops with embedded subroutine calls are scrutinized for impact on Swap overhead and thrashing given particular Allocation Ratio and allocable number of pages in Secure RAM. Various SDP embodiments can perform to the best extent possible given the actual application programs that they service, and some application programs as noted permit SDP efficiency to display itself to an even fuller extent.

Minimizing hunting in the dynamic learning process is here explained using some scenarios of operation. In a first scenario, suppose execution of an application program is page-linear in the sense that execution occurs in a virtual page, then proceeds to another virtual page and executes some more there, and then proceeds similarly to a third, and subsequent pages until execution completes. With a page-linear application, a single Code page could suffice since each new Code page needs to be swapped in once to Secure RAM because the application is a secure application and is to be executed from Secure RAM. Since execution does not return to a previously executed page, there is no need to Swap In any Code page twice. There is no thrashing, and there is no need for even a second Code page slot in Secure RAM in this best-case example.

In a second scenario, suppose execution of an application program is page-cyclic in the sense that somewhere in the application execution occurs in one virtual page, then proceeds directly or by intervening page(s) to another virtual page and executes some more there, and then loops back to the first-mentioned one virtual page. In this case, Swapping In the first-mentioned page could have been avoided if there were at least one additional Code slot as a physical page slot in Secure RAM. Where loops cycle many times between pages, repeated Swapping is avoided by providing enough physical Code page slots in Secure RAM so that the repeated Swapping is unnecessary since the needed pages are still resident in the Secure RAM.

The subject of hunting enters the picture as follows. Suppose allocating a given number M of Code page slots in Secure RAM produces very little thrashing. Then suppose decrementing the allocation from M to just one less number of pages M-1 produces a lot of thrashing because the application has a loop that cycles through M number of pages. There may be a stair-step non-linearity, so to speak, in the efficiency. Accordingly, some dynamic learning embodiments herein keep the next two previous statistics on Swap Ratio prior to a given decrement operation. If the previous statistics indicate a large gap between Swap Ratio in the last two previous statistics, the decrement operation is in some embodiments omitted because the next re-allocation might start a cycle of hunting and increase the amount of Swapping and thrashing. Because a settling point might not in fact exist due to the dynamics of an application program, other dynamic learning embodiments that might not have this extra precaution are regarded as quite useful too.

A second dynamic learning embodiment recognizes that Data pages include time-consuming Dirty page Swap Out as well as Data page Swap In, and Code pages in this example are always clean. Accordingly, the Swap Ratio in this embodiment should settle at a point that takes a Dirty-Swap-Out factor into account, such as by allocating some more space to data pages than otherwise would happen by equalizing the Allocation Ratio to the Swap Ratio. This second embodiment keeps statistics on number of Code pages, number of Data dirty pages, number of Data not-dirty (clean) pages. The time required for SDP to service these pages is either known by pre-testing or measured in clock cycles on the fly.

For this second embodiment, define symbols as follows:

$C$ Number of Code page wipe plus new Code page Swap Ins per second
$T_C$ Code page wipe plus new Code page Swap In time (milliseconds)
$D_n$ Number of Data not-dirty page wipe with new Data page Swap Ins per second
$T_{Dn}$ Data not-dirty page wipe plus Swap In time (milliseconds)
$D_d$ Number of Data dirty page Swap Out with new Data page Swap In per second
$T_{Dd}$ Data dirty page Swap Out plus Swap In time (milliseconds)

Then the time-based ratio of Code page time to Data page time is written down and put in to direct the process ahead of the testing step on the Swap Ratio minus Allocation Ratio. A pseudocode example for this second embodiment is provided next below:

```
        SWAP RATIO <= C TC / (Dn TDn + DdTDd);
DELTA <= 1;
ADJUST <=1;
ALLOCATION_RATIO <= CODE_SLOTS / DATA_SLOTS;

IF SWAP_RATIO * DATA_SLOTS - CODE_SLOTS > DELTA
    THEN CODE_SLOTS <= CODE_SLOTS + ADJUST
        DATA_SLOTS <= DATA_SLOTS - ADJUST;
    ELSEIF CODE_SLOTS - SWAP_RATIO * DATA_SLOTS > EPSILON
THEN CODE_SLOTS <= CODE_SLOTS - ADJUST
        DATA_SLOTS <= DATA_SLOTS + ADJUST;
```

2

In words, if the time it takes for SDP to service Data pages on average is much higher than the time SDP takes to service Code pages, then the redefined Swap Ratio falls, diminishes and decreases, compared to a ratio C/D of Code to Data page rates in the first embodiment without the relative computational complexity of SDP servicing different types of pages taken into account. DELTA is a threshold of adjustment (e.g., unity or some other number of page slots). EPSILON in the first embodiment might change for a criterion based on a difference between Allocation Ratio and Swap Ratio values. The second embodiment, in effect, multiplies that difference by the number of Data Slots and compares to EPSILON, which is less likely to change over the range of allocation. In other words, a number EPSILON having value of page slot threshold (e.g., one (1)) is compared with the difference between the number of Code Slots allocated and the product of the Swap Ratio times the number of Data Slots allocated.

In both the above dynamic learning pseudocode examples, the Allocation Ratio is effectively made to rise by the IF-THEN first part of the conditional pseudocode, and the Allocation Ratio is made to fall by the ELSEIF-THEN second part of the conditional pseudocode. The amount of adjustment ADJUST is given as plus-one (+1) page slot or minus-one (-1) page slot, and empirical testing can show usefulness of other alternative increment values as well.

Initialization of the number of CODE_SLOTS and number of DATA_SLOTS is suitably predetermined and loaded in Flash memory as CODE SLOTS START AND DATA_SLOTS_START values. The Initialization is then adjusted by SDP software based on actual operation and stored on an application-specific basis for use as the application is subsequent re-started in many instances of actual use in a given handset or other system.

A multi-threaded embodiment reserves respective slots for respective applications in a multi-threaded SDP. When one of the applications in the multi-threaded embodiment is added, the slot assignments are changed as follows. From a software point of view, if the SDP multi-threads several applications, the application not running will fatally be evicted after a while. Thus the slot assignment would consist on deactivating the pages of the application not running in order to keep them out of the sorting machine or process. This still keeps the deactivated pages statistics frozen.

Also, consider initial Allocation Ratio and Swap Ratio for a dynamic-learning multi-threaded embodiment wherein a context switch in the middle of execution of a first application (Virtual Machine Context VMC1) may switch execution to the beginning or middle of a second application (Virtual Machine Context VMC2). There, the current Swap Ratio and Allocation Ratio for the first application at the time of context switch is stored for use when the first application is then Swapped back in to resume execution later. Upon context switch to the second application, analogous earlier Swap Ratio and Allocation Ratio information is retrieved so that the second application efficiently executes by benefiting from its own previous experience.

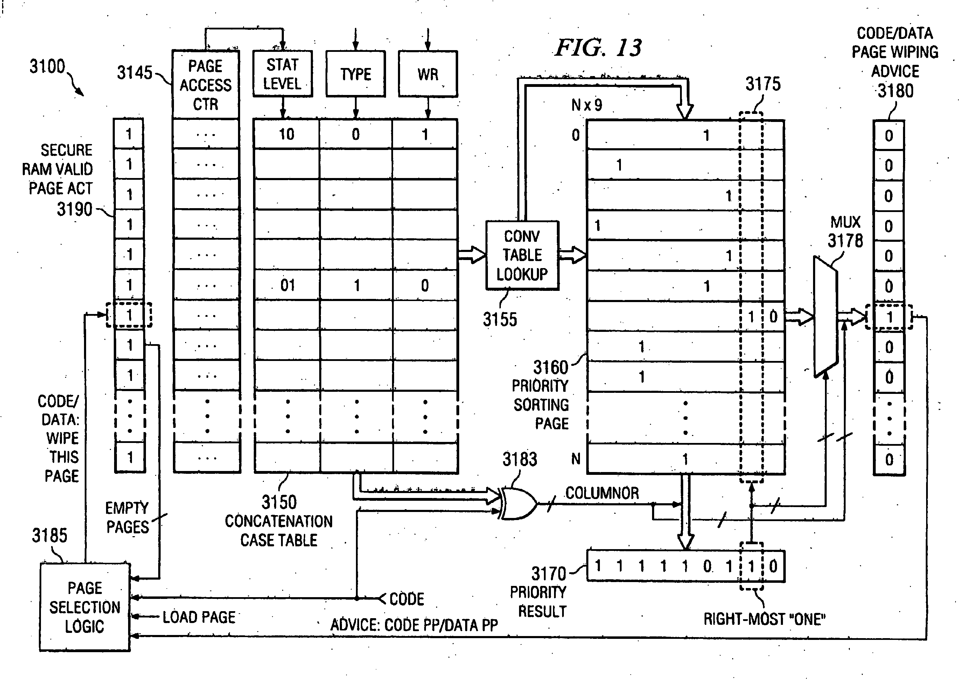

In FIG. 13, another dynamic learning embodiment 3100 responds to a control signal CODE to selectively perform prioritization and wiping advice for Code pages or selectively perform prioritization and wiping advice for Data pages. Either of the embodiments of FIG. 10 and FIG. 11 are suitably arranged for dynamic learning. FIG. 13 shows some rearrangements based on FIG. 10. FIG. 11 is suitably rearranged analogously.

In FIG. 13, Page Access Counters 3145, Concatenation Case Table 3150, Conversion Table Lookup 3155 and Priority Sorting Page 3160 are illustratively analogous to the correspondingly-named structures 2845, 2850, 2855 and 2860 of FIG. 10.

Priority Result 3170 is loaded with OR-bits in the following manner. The bits entered in a given column of Priority Sorting Page 3160 are fed to an OR-gate or OR-process. These bits in a given column of Priority Sorting Page 3160 correspond to the pages from 0 to total number N. Priority Sorting Page 3160 is a N-by-9 array or data structure in this example. The OR operation is performed on each of the nine columns of Priority Sorting Page 3160 to supply nine (9) bits to Priority Result 3170 of FIG. 10 as represented by design pseudocode next below.

In this embodiment, pseudocode defines structure and process that selectively responds to the CODE signal and the TYPE information. For instance, suppose that control signal CODE is active (e.g, high or one), meaning that only Code pages in the page slots allocated to Code pages are allowed to be prioritized and used to generate wiping advice pertaining to a Code page and not a Data page. In that case, CODE being high agrees with the TYPE[N] of each page N that is actually a Code page by TYPE[N] being high (one).

A set of XNOR (Exclusive-NOR) gates equal in number to the number of pages (e.g., 16) are collectively designated XNOR 3183. (An XNOR gate supplies an output high when its two inputs are both high or both low; and the output is otherwise low.) When CODE and TYPE[N] are both high, each particular XNOR gate in XNOR 3183 in such case returns an active output (high, one). The XNOR high output qualifies an AND gate that passes through the state of PRIORITY_SORTING_PAGE_N [0] to PRIORITY_RESULT [0] . The just-described process is similarly performed for each column of Priority Sorting Page 2860 to load each corresponding bit of Priority Result 2870.

```
PRIORITY_RESULT[0] =
    (PRIORITY_SORTING_PAGE_0[0] AND (TYPE[0] XNOR CODE)) OR
    ...OR
    ... OR (PRIORITY_SORTING_PAGE_N[0] AND (TYPE[N] XNOR CODE))

PRIORITY_RESULT[8] =
    (PRIORITY_SORTING_PAGE_0 [8] AND (TYPE[0] XNOR CODE)) OR
    ...OR
    ... OR (PRIORITY_SORTING_PAGE_N[8] AND (TYPE[N] XNOR CODE))
```

Next, for each page N, the process successively looks right-to-left by an IF..ELSE IF...ELSE IF successively-conditional sifting structure and procedure (in CAPS hereinbelow) for the highest priority value (right-most one) for which PRIORITY_RESULT[] 3170 is a one. Because the whole process of loading Priority Result 3170 is conditioned TYPE[N] XNOR CODE, the subsequent right-most ones detection in Priority Result 3170 makes this determination only for the Code pages in Secure RAM.

This successively-conditional procedure moves column-wise in Priority Result 3170 from right to left. As soon as the first "one" (1) is found, which is the right-most one, the process pseudocode hereinbelow loads register ADV and falls through to completion. This right-most one in Priority Result 3170 one identifies corresponding column 3175 of Priority Sorting Page 3160. Column 3175 is significant for determining which page to wipe. The process loads the Code-page-related entries in column 3175 of Priority Sorting Page 3160 via Mux 3178 into the Page Wiping Advice register ADV 3180 to establish the wiping advice bit entries in register ADV. The Code-page-related entries fed to register ADV are qualified by action of XNOR 3183.

The Page Wiping Advice register ADV is thus loaded by design pseudocode hereinbelow by concatenation of PRIORITY_SORTING_PAGE 3170 bits (pertaining to all the physical pages) in column 3175 based on that highest priority right-most one position detected in Priority Result 3170. If the successive procedure fails to find a PRIORITY_RESULT bit active (1) for any of the priorities from 0 to 8, then operations load register ADV with all zeroes, and also zero a default bit named CODE_OTHERS.

```
IF PRIORITY_RESULT[0] = 1 THEN
ADV= (PRIORITY_SORTING_PAGE_0[0] AND (TYPE[0] XNOR CODE)) &
      ...&
      ...& (PRIORITY_SORTING_PAGE_N[0] AND (TYPE[N] XNOR CODE))
ELSE IF PRIORITY_RESULT[1] = 1 THEN
ADV= (PRIORITY_SORTING_PAGE_0[1] AND (TYPE[0] XNOR CODE)) &
      ...&
      ...& (PRIORITY_SORTING_PAGE_N[1] AND (TYPE[N] XNOR CODE))

ELSE IF PRIORITY_RESULT[2] = 1 THEN
ADV= (PRIORITY_SORTING_PAGE_0[2] AND (TYPE[0] XNOR CODE)) &
      ...&
      ...& (PRIORITY_SORTING_PAGE_N[2] AND (TYPE[N] XNOR CODE))

ELSE IF PRIORITY_RESULT[8] = 1 THEN
ADV= (PRIORITY_SORTING_PAGE_0[8] AND (TYPE[0] XNOR CODE)) &
      ...&
      ...& (PRIORITY_SORTING_PAGE_N[8] AND (TYPE[N] XNOR CODE))

ELSE ADV <= 0;
      OTHERS <= 0;
ENDIF;
```

In cases where the Data pages are prioritized, the control signal CODE goes low. As a result, the expression TYPE[N] XNOR CODE is active high for pages having TYPE[N] = 0, meaning Data pages. Then the Priority Result 3170 is generated only from the entries in Priority Sorting Page 3160 pertaining to Data pages. Further, the right-most ones detection on Priority Result 3170 thereby pertains only to the Data pages, and finds the highest priority column for them in Priority Sorting Page 3160. Then the pseuodocode next above loads the Page Wiping Advice register ADV only with entries pertaining to Data pages from that highest priority column.

Page Selection Logic 3185 is similarly qualified by the pages allocated for Code to produce the signal to wipe a particular Code page, or alternatively qualified by the pages allocated for Data to produce the signal to wipe a particular Data page.

Suppose the dynamic learning process determines that a reallocation is needed to allocate a slot for another Code page. The process is driven by the decrement of DATA_SLOTS to wipe a Data page to make way for another Code page. Accordingly, the process makes the control signal CODE go low, so that Priority Sorting Page 3160 and Priority Result 3170 are processed to supply Data page wiping advice via Mux 3178 into register ADV 3180. The Data-page-related entries fed to register ADV are qualified by action of XNOR 3183. In FIG. 13 the legend CODE/DATA is used to indicate the selective operation with respect to Code pages CODE PP. separate from Data pages DATA PP.

Page Selection Logic 3185 responsively directs a wipe of a particular Data page, and signals SDP Swap Manager software to Swap out that Data page if it is Dirty and in any event Swap in a new Code page into the just-wiped page slot in Secure RAM. Operations resume executing the application and servicing it with SDP given the new allocation.

Conversely, suppose the dynamic learning process determines that a reallocation is needed to allocate a slot for another Data page. The process is driven by the decrement of CODE_SLOTS to wipe a Code page to make way for another Data page. Accordingly, the process makes the control signal CODE go high, so that Priority Sorting Page 3160 and Priority Result 3170 are processed to supply Code page wiping advice into register ADV 3180. Page Selection Logic 3185 responsively directs a wipe of a particular Code page, and signals SDP Swap Manager software to Swap in a new Data page into the just-wiped page slot in Secure RAM. Operations resume executing the application and servicing it with SDP given the new allocation.

Still other embodiments re-group pages. The SDP software mechanism in some embodiments allocates and organizes physical pages of Secure memory such as DATA page into Secure RAM page slot (0->5) and Code page into page slot 6 up to highest-numbered page slot, for example. In some process embodiments that load multiple applications (multi-threaded SDP), some slots are suitably reserved for APP1 or APPn. The SDP mechanism suitably operates when possible to re-group pages that have a relationship or meaning in common.

An example of usefulness in re-grouping application pages (app page 1, ..., app page N) can be seen by considering that in a larger system, the pages can have fragmentation problems like those a hard drive can experience. Re-grouping has particular value because it delivers automatic de-fragmentation. "Fragmentation" pertains to a condition of related pages becoming widely separated in a storage medium so that the access process is slowed down. The re-grouping mechanism herein is advantageously applied for paging network resources onto a hard drive, since the SSM machinery is enhanced to not only account for the number of accesses but also the time to access the resources (Hard drive, USB, Network) to build a trusted sorting process.

SDP monitors internal RAM space defined by a range of addresses. One type of SDP embodiment defines a range of addresses for all spaces used by SDP such as Flash memory, DRAM, Hard Drive, and other components. These components have fragmentation problems of their own or have pages in all them (e.g., ten pages in internal RAM; forty pages on Flash memory; forty pages on Hard Drive and all these pages used for the same application). In an embodiment, SDP is used to execute on a distant memory location that has small bandwidth, such as a Network location. Cascading several SDP processes is added to such type of SDP embodiment and other SDP embodiments. Fragmentation matters, for example, when switching from one resource to another introduces access timing latency. Thus, re-grouping all pages of an application into one resource or contiguous space is performed to reduce or eliminate such access timing latency.

A hit counter performs a count for SDP purposes herein by adding to the number of accesses the time to access the resources (Hard drive, USB, Network). The time to access resources is combined with the hit count, by

$$\text{ResourceHitCount} = \text{ResourceHitCount} + 1.$$

No running clocks are necessary, so frequency of accesses is used. The arithmetic is suitably either increment a resource count or reset/clear it because the statistic is invalid, and then start hit counts over again. Because SDP supports future code and extensions to the environment, the code behavior is unknown. Therefore, this hardware provides more visibility to what the code does (with respect to frequency of what it does).

Some embodiments regard a Code page and an unmodified Data page as similar enough to be given equivalent prioritization and thereby further reduce the relatively modest chip real estate of the prioritization circuitry. Since there are fewer priority levels, the chances of tied (equal) priorities will be higher and more random selection, or otherwise-subsequent page selection, to break a tie will be involved for a given number of Secure RAM physical page slots governed by the SDP. Modified and Unmodified are regarded as the relevant page Types and the TYPE[N] and WR[N] registers are either merged or fed to logic that produces a third merged page type variable MODIF[N]. An example prioritization schedule next still uses a 4-tier Usage Level and reduces the number of priorities by three compared to the TABLE 6 encodings.

    MODIF=0 page tagged as VERY LOW usage
    MODIF=0 page tagged as LOW usage
    MODIF=1 page tagged as VERY LOW usage
    MODIF=1 page tagged as LOW usage
    MODIF=0 page tagged as MEDIUM usage
    MODIF=1 page tagged as MEDIUM usage

Another embodiment has a variable n representing the access timing of the memory. Depending of the value of n, the Statistics counter is decremented by one only each time n accesses occur. This variable n is configured in an SDP register (e.g., 2 bits per page, 00: very fast access timing; 01: fast; 10: medium; 11: slow). The Statistics counter is operated as follows: 00: One access, decrement by one. 01: Two accesses, decrement by one. 10: Four accesses, decrement by one. 11: Eight accesses, decrement by one.

Still another embodiment has two or more Priority Result registers 2870A and 2870B and Page Wiping Advice registers 2880A and 2880B muxed for interleaved prioritization fast operations for Code and Data pages respectively.

When one of the applications in one type of SDP multi-threading embodiment is terminated, the slot assignments are suitably changed by deactivating the pages of the current running application and re-activating the application that was frozen. For example, the Page Access Counters 2845 are frozen by the de-activation and the statistics are fully operational as if the switch to another application never occurred.

Various embodiments are used with one or more microprocessors, each microprocessor having a pipeline is selected from the group consisting of 1) reduced instruction set computing (RISC), 2) digital signal processing (DSP), 3) complex instruction set computing (CISC), 4) superscalar, 5) skewed pipelines, 6) in-order, 7) out-of-order, 8) very long instruction word (VLIW), 9) single instruction multiple data (SIMD), 10) multiple instruction multiple data (MIMD), and 11) multiple-core using any one or more of the foregoing.

DESIGN, VERIFICATION AND FABRICATION

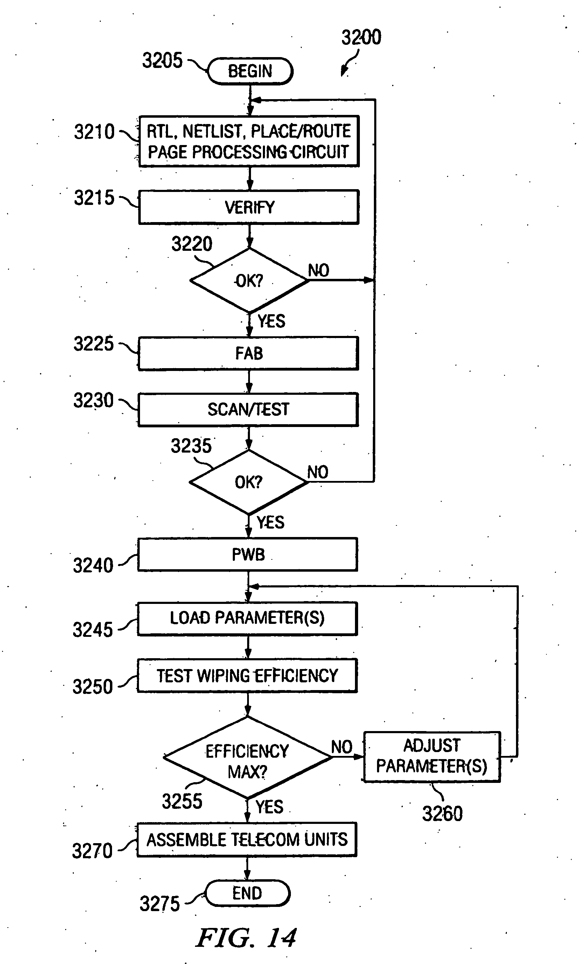

Various embodiments of an integrated circuit improved as described herein are manufactured according to a suitable process of manufacturing 3200 as illustrated in the flow of FIG. 14. The process begins at step 3205 and a step 3210 preparing RTL (register transfer language) and netlist for a particular design of a page processing circuit including a memory for pages, a processor coupled to the memory, and a hardware page wiping advisor circuit coupled to the processor and operable to prioritize pages based both on page type and usage statistics. The Figures of drawing show some examples, and the detailed description describes those examples and various other alternatives.

In a step 3215, the design of the page processing circuit is verified in simulation electronically on the RTL and netlist. In this way, the contents and timing of the memory, of the processor and of the hardware page wiping advisor circuit are verified. The operations are verified pertaining to producing the ACT, WR, TYPE and STAT entries, generating the priority codes for the priority sorting table, sorting the priority codes, generating the page wiping advice ADV, and resolving tied-priority pages. Then a verification evaluation step 3220 determines whether the verification results are currently satisfactory. If not, operations loop back to step 3210.

If verification evaluation 3220 is satisfactory, the verified design is fabricated in a wafer fab and packaged to produce a resulting integrated circuit at step 3225 according to the verified design. Then a step 3230 verifies the operations directly on first-silicon and production samples by using scan chain methodology on the page processing circuit. An evaluation decision step 3235 determines whether the chips are satisfactory, and if not satisfactory, the operations loop back as early in the process such as step 3210 as needed to get satisfactory integrated circuits.

Given satisfactory integrated circuits in step 3235, a telecommunications unit based on teachings herein is manufactured. This part of the process first prepares in a step 3240 a particular design and printed wiring board (PWB) of the telecommunication unit having a telecommunications modem, a microprocessor coupled to the telecommunications modem, a secure demand paging processing circuitry coupled to the microprocessor and including a secure internal memory for pages, a less-secure, external memory larger than the secure internal memory, and a hardware secure page wiping advisor for prioritizing pages based both on page type and usage statistics and at least one wiping advisor parameter loaded in a step 3245, and a user interface coupled to the microprocessor.

The particular design of the page processing circuit is tested in a step 3250 by electronic simulation and prototyped and tested in actual application. The wiping advisor parameters include the usage level tier definitions, any application-specific or all-application static allocation of Secure RAM to Code pages and Data pages. Also, for dynamic learning embodiments, initial application-specific allocations and parameters like DELTA or EPSILON are suitably adjusted.

The wiping advisor parameter(s) are adjusted for increased page wiping efficiency in step 3255, as reflected in fast application execution, decreased Swap Rate in executing the same application code, lower power dissipation and other pertinent metrics. If further increased efficiency is called for in step 3255, then adjustment of the parameter(s) is performed in a step 3260, and operations loop back to reload the parameter(s) at step 3245 and do further testing. When the testing is satisfactory at step 3255, operations proceed to step 3270.

In manufacturing step 3270, the adjusted wiping advisor parameter(s) are loaded into the Flash memory. The components are assembled on a printed wiring board or otherwise as the form factor of the design is arranged to produce resulting telecommunications units according to the tested and adjusted design, whereupon operations are completed at END 3275.

It is emphasized here that while some embodiments may have an entire feature totally absent or totally present, other embodiments, such as those performing the blocks and steps of the Figures of drawing, have more or less complex arrangements that execute some process portions, selectively bypass others, and have some operations running concurrently sequentially regardless. Accordingly, words such as "enable," disable," "operative," "inoperative" are to be interpreted relative to the code and circuitry they describe. For instance, disabling (or making inoperative) a second function by bypassing a first function can establish the first function and modify the second function. Conversely, making a first function inoperative includes embodiments where a portion of the first function is bypassed or modified as well as embodiments where the second function is removed entirely. Bypassing or modifying code increases function in some embodiments and decreases function in other embodiments.

A few preferred embodiments have been described in detail hereinabove. It is to be understood that the scope of the invention comprehends embodiments different from those described yet within the inventive scope. Microprocessor and microcomputer are synonymous herein. Processing circuitry comprehends digital, analog and mixed signal (digital/ analog) integrated circuits, ASIC circuits, PALs, PLAs, decoders, memories, non-software based processors, and other circuitry, and digital computers including microprocessors and microcomputers of any architecture, or combinations thereof. Internal and external couplings and connections can be ohmic, capacitive, direct or indirect via intervening circuits or otherwise as desirable. Implementation is contemplated in discrete components or fully integrated circuits in any materials family and combinations thereof. Various embodiments of the invention employ hardware, software or firmware. Process diagrams herein are representative of flow diagrams for operations of any embodiments whether of hardware, software, or firmware, and processes of manufacture thereof.

While this invention has been described with reference to illustrative embodiments, this description is not to be construed in a limiting sense. Various modifications and combinations of the illustrative embodiments, as well as other embodiments of the invention may be made. The terms "including", "includes", "having", "has", "with", or variants thereof are used in the detailed description and/or the claims to denote non-exhaustive inclusion in a manner similar to the term "comprising".

## Claims

1. A page processing circuit (1040), comprising:

   a memory (1034) for pages;
   a processor (1030) coupled to said memory (1034); and **characterised by**
   a page wiping advisor circuit (2730) coupled to said processor (1030) and operable to prioritize pages for wiping based both on page type (TYPE) and usage (STAT) statistics, the page wiping advisor circuit (2730) including

   a page access counter (2845, 3145) for a time-varying page-specific entry that is settable to an initial value in response to loading a page into the memory (1034), and resettable to a value approximating the initial value in response to a memory access to that page, the page access counter (2845, 3145) being operable to change in value in a progressive departure from the initial value in response to a memory access to a page other than a page to which the counter value pertains
   a concatenation case table (2850, 3150) having a page-specific entry formed from a corresponding page-specific entry from said page access counter (2845, 3145), a page type entry (TYPE) and an entry indicating whether the page has been written (WR(N]=1); and
   a conversion circuit (2855, 2955, 3155) arranged to generate a page priority code for each page responsive to the concatenation case table (2850, 3150).

2. The page processing circuit as claimed in claim 1, wherein the generated page priority code has a singleton bit value accompanied by complement bit values, the singleton bit value having a position across the page priority code representing page priority.

3. The page processing circuit as claimed in claim 2, wherein said page wipingadvisor circuit (2730) has a detector (2870) to sort the page priority codes for an extreme position of the singleton bit value.

4. The page processing circuit as claimed in claim 2 and 3, wherein said page wipingadvisor circuit (2730) is operable to identify a page to wipe by the singleton bit value in its priority code being in an extreme position (R) indicative of highest wiping priority (2870) compared to priority codes of other pages.

5. The page processing circuit as claimed in claim 1, wherein said page wiping advisor circuit (2730) further includes a priority detector circuit (2970) coupled to the conversion circuit (2955) and operable to identify at least one page to wipe based on priority code.

6. The page processing circuit as claimed in claim 1, wherein said page wiping advisor circuit (2730) includes a priority sorting table (2860, 3160) for page-specific wiping priority codes.

7. The page processing circuit as claimed in claim 6, wherein said page wiping advisor circuit includes a priority sorting circuit operable (2870) to identify at least one page in the priority sorting table (2860, 3160) having a highest priority for page wiping.

8. The page processing circuit as claimed in claim 7, wherein said page wiping advisor circuit (2730) further including a page selection logic (2885) fed by the priority sorting circuit (2870) for selecting a page in the memory (1034) to wipe.

9. The page processing circuit as claimed in any preceding claim, wherein said the page type entry (TYPE) comprises code (CODE) or data (DATA) types of pages.

10. The page processing circuit as claimed in claim 1, wherein said page wiping advisor circuit (2730) includes an allocation circuit operable to dynamically respond to page swaps by page type, to allocate page space in said memory.

11. The page processing circuit as claimed in claim 10, wherein the conversion circuit (2855) is operable to prioritize pages of one page type (CODE) and separately prioritize pages of another page type (DATA).

12. The page processing circuit as claimed in any preceding claim, wherein the page wiping advisor circuit (2730) includes a register (ADV, 2880, 3180) for holding page wiping advice, the register being coupled to said processor (1030).

13. The page processing circuit claimed in claim 1, wherein said page wiping advisor circuit (2730) includes an interrupt (1040) coupled to said processor (1030).

14. The page processing circuit claimed in any preceding claim, wherein said page wiping advisor circuit (2730) includes a usage level encoder (2720) operable to generate a usage level code in response to said page access counter (2845,3145).

15. The page processing circuit claimed in any preceding claim, further comprising a cryptographic circuit coupled to said memory (1034) and operable to perform a cryptographic operation on a page identified by said page wiping advisor circuit (2730).

16. The page processing circuit as claimed in claim 1, further comprising a secure state machine (2060) situated on a single integrated circuit chip (1100, 1400) with said processor (1030) and said memory (1034), said secure state machine (2060) monitoring accesses to said memory (1034), whereby said memory has security.

17. The page processing circuit as claimed in any preceding claim, wherein the page access counter (2845, 3145) is operable to count both read and write accesses to respective pages in said memory (1034).

18. The page processing circuit claimed in claim 1, further comprising an instruction bus (INST) and a data bus (DATA) coupled to said memory (1034) and wherein said page wiping advisor circuit (2730) is responsive to both said instruction bus and said data bus to form the usage statistics (STAT, 2720).

19. The page processing circuit claimed in claim 18, further comprising a third bus (2745) and wherein said page wiping advisor circuit (2730) is additionally coupled by said third bus (2745) to said processor (1030).

20. The page processing circuit claimed in claim 1, wherein said page wiping advisor circuit is operable to prioritize an unmodified page (WR[N]=0) in said memory as having a higher priority for wiping than a modified page (WR[N]=1).

21. The page processing circuit claimed in claim 1, wherein the page wiping advisor circuit (2875, 2970) is operable to prioritize a first page that has one level of use in said memory (1034) as having a higher priority for wiping than a second page that has another level indicative of greater use in said memory.

22. The page processing circuit as claimed in any preceding claim, wherein the page wiping advisor circuit is operable, when more than one page has the highest page wiping priority, to select a page to wipe from the pages having the highest page priority.

**23.** The page processing circuit claimed in any preceding claim, wherein the page wiping advisor circuit (2875, 2970) is operable, when all pages have the lowest page wiping priority, to select a page to wipe from the pages.

**24.** The page processing circuit claimed in claim 1, wherein said memory (1034) may have an empty page and an occupied page, and said page wiping advisor circuit (2730) is operable, when memory has an empty page, to bypass wiping an occupied page.

**25.** A page processing method for use with a memory having pages, the method comprising
representing a page [N] by a first entry (TYPE[N]) indicating the page type; and **characterised by**
representing the page [N] by a second entry (WR[N]) indicating whether the page is modified or not;
further representing the page by a third entry that is set to an initial value (127) by loading a page corresponding to that entry in the memory, reset to a value approximating the initial value in response to a memory access to that page, and changed in value in a progressive departure from the initial value in response to a memory access to a page other than the page to which the second entry pertains;
generating a page priority code for the page from the first, second and third entries; and
identifying at least one page having a highest priority for wiping from the page priority codes.

**26.** The page processing method claimed in claim 25, for use with a second memory having a larger capacity than said first memory, and further comprising demand paging between said memory and said second memory based on said page priority codes.

**27.** The page processing method claimed in claim 25, further comprising swapping out the page based on said first second and third entries, to another memory.

**28.** The page processing method claimed in any of claim 25, further comprising performing a cryptographic operation on the page based on said first, second and third entries.

**29.** A telecommunications unit comprising
a telecommunications modem;
a microprocessor coupled to said telecommunications modem; and **characterised by**
page processing circuitry according to any of claims 1 to 24 coupled to said microprocessor.

**Patentansprüche**

**1.** Eine Seiteverarbeitungsschaltung (1040), bestehend aus
einem Speicher (1034) für Seite;
einem Prozessor (1030) gekoppelt zum jeweiligen Speicher (1034); und gekennziechent durch
eine Seiteauslöschungsverständigensschaltung (2730) gekoppelt zum jeweiligen Prozessor (1030) und betriebsfähig Seiten für die Auslöschung im Bezug auf die Seiteart (TYPE) und die Verwendungsstatistiken (STAT) zu prioritisieren, die Seiteauslöschungsverständigensschaltung (2730) bestehend aus
einem Seitezugangszähler (2845, 3145) für eine zeitvarierende seitebestimmte Eingabe, die setzbar zu einem Anfangswert in Reaktion auf die Ladung einer Seite in dem Speicher (1034) ist, und wiedersetzbar zu einem Wert näherkommend den Anfangswert in Reaktion auf einen Speicherzugang zu dieser Seite, der Seitezugangszähler (2845, 3145) betriebsfähig ist, in Wert in einem Progressionsabweichen von dem Anfangswert in Reaktion auf einen Speicherzugang zu einer Seite ausser einer Seite bei der der Zählerwert betrifft zu ändern;
einer Konkatenationfalltabelle (2850, 3150) mit einer seitebestimmten Eingabe gebildet von einer entsprechenden seitebestimmten Eingabe von dem jeweiligen Seitezugangszähler (2845, 3145), eine Seitearteingabe (TYPE) und eine Eingabe, die zeigt, ob die Seite geschriebt worden ist (WR[N]=1); und
einer Konvertierungsschaltung (2855, 2955, 3155) so konfiguriert, einen Seiteprioritätskode für jede Seite zu erstellen, die zu der Konkatenationfalltabelle (2850, 3150) reagiert.

**2.** Die Seiteverarbeitungsschaltung nach Anspruch 1, wobei der erzeugte Seiteprioritätskode einen einelementigen Bitwert mit Komplementbitwerten, der einzelementige Bitwert hat eine Stellung über dem Seiteprioritätskode, der eine Seitepriorität darstellt.

**3.** Die Seiteverarbeitungsschaltung nach Anspruch 2, wobei die Seiteauslöschungsverständigensschaltung (2730) einen Detektor (2870) enthält, um die Seiteprioritätskoden für eine Extremstellung eines einelementigen Bitwerts zu ordnen.

4. Die Seiteverarbeitungsschaltung nach Ansprüchen 2 und 3, wobei die Seiteauslöschungsverständigensschaltung (2730) betriebsfähig ist, eine Seite zu identifizieren, die von dem einelementigen Bitwert in seinem Prioritätskode ausgelöscht wird, welcher Kode in einer Extremstellung (R) indikativ einer höchsten Auslöschungspriorität (2870) im Vergleich zu Prioritätskoden von anderen Seiten ist.

5. Die Seiteverarbeitungsschaltung nach Anspruch 1, wobei die Seiteauslöschungsverständigensschaltung (2730) dazu eine Prioritätsdetektorschaltung (2970) einschliesst, die zu der Konvertierungsschaltung (2955) gekoppelt ist und ist betriebsfähig mindestens eine Seite für die Auslöschung zu indentifizieren, die auf den Prioritätskode gegründet wird.

6. Die Seiteverarbeitungsschaltung nach Anspruch 1, wobei die Seiteauslöschungsverständigensschaltung (2730) eine Prioritätsordnungstabelle (2860, 3160) für seitebestimmter Auslöschungsprioritätskoden einschliesst.

7. Die Seiteverarbeitungsschaltung nach Anspruch 6, wobei die Seiteauslöschungsverständigensschaltung (2730) eine Prioritätsordnungstabelle (2870) einschliesst, die betriebsfähig ist, mindestens eine Seite in der Prioritätsordnungstabelle (2860, 3160) zu identifizieren, die eine höchste Auslöschungspriorität hat.

8. Die Seiteverarbeitungsschaltung nach Anspruch 7, wobei die Seiteauslöschungsverständigensschaltung (2730) dazu eine Seitauswahlslogik (2885) einschliesst, die von einer Prioritätsordnungsschaltung zugeleitet ist, um eine Seite in dem Speicher (1034) auszuwählen, die ausgelöscht wird.

9. Die Seiteverarbeitungsschaltung nach allen vorhergehenden Ansprüchen, wobei die Seitearteingabe (TYPE) Kode-(CODE) oder Daten (DATA)-Seitearten einschliesst.

10. Die Seiteverarbeitungsschaltung nach Anspruch 1, wobei die Seiteauslöschungsverständigensschaltung (2730) eine Zuteilungsschaltung einschliesst, die betriebsfähig ist, auf Seiteaustauschen nach Seiteart dynamisch zu reagieren, um Seitekapazität in dem jeweiligen Speicher bereitzustellen.

11. Die Seiteverarbeitungsschaltung nach Anspruch 10, wobei die Konvertierungsschaltung (2855) betriebsfähig ist, die Seite von einem Seiteart (CODE) zu prioritisieren und Seite von einem anderen Seiteart (DATA) unabhängig zu prioritisieren.

12. Die Seiteverarbeitungsschaltung nach allen vorhergehenden Ansprüchen, wobei die Seiteauslöschungsverständigensschaltung (2730) einem Register (ADV, 2880, 3180) für den Speicher von Seiteauslöschungshinweis einschliesst, der Register ist zum jeweiligen Prozessor (1030) gekoppelt.

13. Die Seiteverarbeitungsschaltung nach Anspruch 1, wobei die Seiteauslöschungsverständigensschaltung (2730) eine Unterbechung (1040) einschliesst, die zum jeweiligen Prozessor (1030) gekoppelt ist.

14. Die Seiteverarbeitungsschaltung nach allen vorhergehenden Ansprüchen, wobei die Seiteauslöschungsverständigensschaltung (2730) einen Anwendungsniveausencoder (2720) einschliesst, der betriebsfähig ist, einen Anwendungsniveauskode in Reaktion auf den jeweiligen Seitezugangszähler (2845, 3145) zu erzeugen.

15. Die Seiteverarbeitungsschaltung nach allen vorhergehenden Ansprüchen, dazu bestehend aus einer kryptografischen Schaltung, die zum jeweiligen Speicher (1034) gekoppelt ist, und ist betriebsfähig, einen kryptografischen Arbeitsgang auf eine von der jeweiligen Seiteauslöschungsverständigensschaltung (2730) identifizierende Seite.

16. Die Seiteverarbeitungsschaltung nach Anspruch 1, dazu aus einem Sicherzustandgerät (2060), das auf einen einzelen integrierten Schaltungschip (1100, 1400) mit dem jeweiligen Prozessor (1030) und dem jeweiligen Speicher (1034) ist, das jeweiligen Sicherzustandgerät beobachtet die Zugänge zum jeweiligen Speicher (1034), wobei der Speicher Sicherheits hat.

17. Die Seiteverarbeitungsschaltung nach allen vorhergehenden Ansprüchen, wobei der Seitezugangszähler (2845, 3145) betriebsfähig ist, beide Lesen-und Schreiben-Zugänge zu den jeweiligen Seiten in dem Speicher (1034) zu zählen.

18. Die Seiteverarbeitungsschaltung nach Anspruch 1, dazu aus einem Befehlsbus (INST) und einem Datenbus besteht, die zu dem jeweiligen Speicher (1034) gekoppelt sind, und wobei die jeweilige Seiteauslöschungsverständigensschaltung (2730) auf beide der jeweiligen Befehls- und Datenbus reagiert, um die Anwendungstatistiken (STAT, 2720) zu bilden.

19. Die Seiteverarbeitungsschaltung nach Anspruch 18, dazu aus einem dritten Bus (2745), besteht, und wobei die Seiteauslöschungsverständigensschaltung (2730) zusätzlich durch den dritten Bus (2745) zu dem jeweiligen Prozessor (1030) gekoppelt ist.

20. Die Seiteverarbeitungsschaltung nach Anspruch 1, wobei die Seiteauslöschungsverständigensschaltung betriebsfähig ist, eine ungeänderte Seite (WR[N]=0) in dem jeweiligen Speicher zu priorisieren, indem sie eine höhere Priorität för die Auslöschung als eine geänderte Seite (WR[N]=1) hat.

21. Die Seiteverarbeitungsschaltung nach Anspruch 1, wobei die Seiteauslöschungsverständigensschaltung (2875, 2970) betriebsfähig ist, eine erste Seite mit einem Auswendungsniveau in dem jeweiligen Speicher (1034) zu priorisieren, indem sie eine höhere Priorität für die Auslöschung als eine zweite Seite hat, welche zweite Seite ein anderes Niveau hat, das indikativ von grösserer Anwendung in dem Speicher hat.

22. Die Seiteverarbeitungsschaltung nach allen vorhergehenden Ansprüchen, wobei die Seiteauslöschungsverständigensschaltung betriebsfähig ist, eine Seite für die Auslöschung von den Seiten mit der höchsten Seitepriorität zu wählen, wenn mehr als eine Seite die höchste Seiteauslöschungspriorität hat.

23. Die Seiteverarbeitungsschaltung nach allen vorhergehenden Ansprüchen, wobei die Seiteauslöschungsverständigensschaltung (2875, 2970) betriebsfähig ist, eine Seite für die Auslöschung von den Seiten zu wählen, wenn alle Seite die niedrigste Seiteauslöschungspriorität haben.

24. Die Seiteverarbeitungsschaltung nach Anspruch 1, wobei der Speicher (1034) eine unbeschäftigte Seite und eine beschäftigte Seite haben könnte, und die Seiteauslöschungsverständigensschaltung (2730) betriebsfähig ist, die Auslöschung einer beschäftigten Seite zu vermeiden, wenn der Speicher eine unbeschäftigte Seite hat.

25. Ein Seiteverarbeitungsverfahren für Anwendung mit einem Speicher, der Seiten hat, das Verfahren bestehend aus der Darstellung einer Seite [N] durch eine erste Eingabe (TYPE[N]), die eine Seiteart bezeichnet; und **gekennzeichnet durch**
    die Darstellung einer Seite [N] **durch** eine zweite Eingabe (WR[N]), die bezeichnet, ob die Seite geändert ist oder nicht;
    der zusätzlichen Darstellung der Seite **durch** eine dritte Eingabe, die zu einem Anfangswert (127) **durch** die Ladung einer Seite gesteuert ist, welche Seite diese Eingabe in dem Speicher entspricht, die Rückstellung zu einem Wert in reaktion auf eine Speicherzugang zu dieser Seite, welche Wert ungefähr den Anfangswert ist, und eine Wertänderung in einem Progressionsabweichen von dem Anfangswert in Reaktion auf eine Speicherzugang zu einer Seite ausser der Seite bei der die zweite Eingabe betrifft;
    der Erzeugung eines Seiteprioritätskodes für die Seite von den ersten, zweiten und dritten Eingaben; und
    der Identifizierung mindestens einer Seite mit einer höchsten Priorität für die Auslöschung von den Seiteprioritätskoden.

26. Das Seiteverarbeitungsverfahren nach Anspruch 25, für die Anwendung mit einem zweiten Speicher mit einer höheren Kapazität als den jeweiligen ersten Speicher, und dazu bestehend aus dem Seitenabruf zwischen dem jeweiligen Speicher und dem jeweiligen zweiten Speicher gemäß den jeweiligen Seiteprioritätskoden.

27. Das Seiteverarbeitungsverfahren nach Anspruch 25, dazu bestehend aus dem Auslagern der Seite zu einem anderen Speicher gemäß den jeweiligen ersten, zweiten und dritten Eingaben.

28. Das Seiteverarbeitungsverfahren nach Anspruch 25, dazu bestehend aus der Ausführung eines kryptografischen Betriebs auf der Seite gemäß den ersten, zweiten und dritten Eingaben.

29. Eine Telekommunikationseinheit bestehend aus
    einem Telekommunikationsmodem;
    einem Mikroprozessor gekoppelt zu dem jeweiligen Telekommunikationsmodem; **gekennzeichnet durch**
    die Seiteverarbeitungsschaltung nach allen Ansprüchen von 1 bis 24, die zum jeweiligen Mikroprozessor gekoppelt ist.

**Revendications**

1.  Un circuit de traitement de page (1040) comprenant :

    une mémoire (1034) pour les pages ;
    un processeur (1030) couplé à ladite mémoire (1034) ; et **caractérisé par**
    un circuit conseillant pour effacer une page (2730) couplé audit processeur (1030) et capable de donner la priorité aux pages pour l'effacement selon le type de page (TYPE) et les statistiques d'usage (STAT), le circuit conseillant pour effacer une page (2730) comprenant : un compteur d'accès à la page (2845, 3145) pour une entrée qui est spécifique à une page et avec une variation de temps qui est réglable à une valeur débutante en réponse au chargement d'une page dans la mémoire (1034), et encore réglable à une valeur vers la valeur débutante en réponse à un accès de mémoire à cette page-là, le compteur d'accès à la page (2845, 3145) étant capable de changer en valeur dans une réorientation progressive de la valeur débutante en réponse à un accès de mémoire à une page à part de la page à laquelle la valeur compteur se rapporte ;
    une table de cas de concaténation (2850, 3150) ayant une entrée qui est spécifique à une page formée d'une entrée correspondante qui est spécifique à une page dudit compteur d'accès de page (2845, 3145), une entrée de type de page (TYPE) et une entrée indiquant si la page a été écrite (WR[N]=1) ; et
    un circuit de conversion (2855, 2955, 3155) configuré pour générer un code de priorité de page pour chaque page responsive à la table de cas de concaténation (2850, 3150).

2.  Le circuit de traitement de page selon la revendication 1, où le code généré de priorité de page a une valeur de bit seule accompagnée par des valeurs complémentes de bit, la valeur de bit seule ayant une position à l'autre côté du code de priorité de page représentant la priorité de page.

3.  Le circuit de traitement de page selon la revendication 2, où ledit circuit conseillant pour effacer une page (2730) a un détecteur (2870) pour classer les codes de priorité de page pour une position extrême de la valeur de bit seule.

4.  Le circuit de traitement de page selon les revendications 2 et 3, où ledit circuit conseillant pour effacer une page (2730) est capable d'identifier une page pour l'effacement par la valeur de bit seule dans son code de priorité étant dans une position extrême (R) indicative de la priorité d'effacement la plus haute (2870) comparée aux codes de priorité des autres pages.

5.  Le circuit de traitement de page selon la revendication 1, où ledit circuit conseillant pour effacer une page (2730) comprend en plus un circuit de détecteur de la priorité d'effacement de page (2970) couplé au circuit de conversion (2955) et capable d'identifier au moins une page pour l'effacement selon le code de priorité.

6.  Le circuit de traitement de page selon la revendication 1, où ledit circuit conseillant pour effacer une page (2730) comprend une table de classer la priorité (2860, 3160) pour les codes de priorité pour l'effacement des pages spécifiques.

7.  Le circuit de traitement de page selon la revendication 6, où ledit circuit conseillant pour effacer une page comprend un circuit de classer la priorité (2870) capable d'identifier au moins une page dans la table de classer la priorité (2860, 3160) ayant une priorité la plus haute pour l'effacement des pages.

8.  Le circuit de traitement de page selon la revendication 7, où ledit circuit conseillant pour effacer une page (2730) comprend en plus une logique pour la sélection de page (2885) alimentée par le circuit de classer la priorité (2870) pour sélectionner une page dans la mémoire (1034) à l'effacer.

9.  Le circuit de traitement de page selon les revendications précédentes, où ladite entrée de type de page (TYPE) comprend les pages de type de code (CODE) ou des données (DATA).

10. Le circuit de traitement de page selon la revendication 1, où ledit circuit conseillant pour effacer une page (2730) comprend un circuit d'attribution capable de répondre dynamiquement aux échanges de page par le type de page, pour attribuer l'espace de page dans ladite mémoire.

11. Le circuit de traitement de page selon la revendication 10, où le circuit de conversion (2855) est capable de donner la priorité aux pages d'un type de page (CODE) et donner individuellement la priorité aux pages d'un autre type de page (DATA).

12. Le circuit de traitement de page selon les revendications précédentes, où ledit circuit conseillant pour effacer une page (2730) comprend un registre (ADV, 2880, 3180) pour conserver le conseil pour l'effacement de page, le registre étant couplé audit processeur (1030).

13. Le circuit de traitement de page selon la revendication 1, où ledit circuit conseillant pour effacer une page (2730) comprend une interruption (1040) couplée audit processeur (1030).

14. Le circuit de traitement de page selon les revendications précédentes, où ledit circuit conseillant pour effacer une page (2730) comprend un encodeur du niveau d'usage (2720) capable de générer un code du niveau d'usage en réponse audit compteur d'accès de page (2845,3145).

15. Le circuit de traitement de page selon les revendications précédentes, comprend en plus un circuit cryptographique couplé à ladite mémoire (1034) et capable d'exécuter un fonctionnement cryptographique sur une page identifiée par ledit circuit conseillant pour effacer une page (2730).

16. Le circuit de traitement de page selon la revendication 1, comprend en plus un appareil d'état sûr (2060) situé sur une seule puce de circuit intégré (1100, 1400) avec ledit processeur (1030) et ladite mémoire (1034), ledit appareil d'état sûr (2060) surveillant les accès à ladite mémoire (1034), selon lequel la mémoire a la sécurité.

17. Le circuit de traitement de page selon les revendications précédentes, où le compteur d'accès de page (2845, 3145) est capable de compter les deux accès de lire et écrire aux pages respectives dans ladite mémoire (1034).

18. Le circuit de traitement de page selon la revendication 1, comprend en plus un bus d'instruction (INST) et un bus de données (DATA) les deux couplés à ladite mémoire (1034) et où ledit circuit conseillant pour effacer une page (2730) est responsif auxdits bus d'instruction et de données pour former les statistiques d'usage (STAT, 2720).

19. Le circuit de traitement de page selon la revendication 18, comprend en plus un troisième bus (2745) et où ledit circuit conseillant pour effacer une page (2730) est en plus couplé par le troisième bus (2745) audit processeur (1030).

20. Le circuit de traitement de page selon la revendication 1, où ledit circuit conseillant pour effacer une page (2730) est capable de donner la priorité à une page non-modifiée (WR[N]=0) dans ladite mémoire comme si elle a une priorité plus haute pour effacer qu'une page modifiée (WR[N]=1).

21. Le circuit de traitement de page selon la revendication 1, où le circuit conseillant pour effacer une page (2875, 2970) est capable de donner la priorité à une première page qui a un niveau d'usage dans ladite mémoire (1034) comme si elle a une priorité plus haute pour effacer que la deuxième page qui a un autre niveau indicatif d'usage plus haut dans ladite mémoire.

22. Le circuit de traitement de page selon les revendications précédentes, où ledit circuit conseillant pour effacer une page est capable de sélectionner une page à effacer des pages ayant la plus haute priorité de page, si plus qu'une page a la plus haute priorité d'effacement de page.

23. Le circuit de traitement de page selon les revendications précédentes, où le circuit conseillant pour effacer une page(2875, 2970) est capable de sélectionner une page à effacer des pages, si toutes les pages ont la priorité la plus basse d'effacement de page.

24. Le circuit de traitement de page selon la revendication 1, où ladite mémoire (1034) pourrait avoir une page vide et une page occupée, et ledit circuit conseillant pour effacer une page (2730) est capable d'éviter l'effacement d'une page occupée, si la mémoire a une page vide.

25. Une méthode pour le traitement de page pour utiliser avec une mémoire qui a des pages, la méthode comprenant la représentation d'une page [N] par une première entrée (TYPE [N]) indiquant le type de la page ; et **caractérisée par** la représentation de la page [N] par une deuxième entrée (WR [N]) indiquant si la page est modifiée ou non ; la représentation supplémentaire de la page par une troisième entrée qui est réglée à une valeur débutante (127) en chargeant une page correspondant à cette entrée-là dans la mémoire, réglée encore à une valeur vers la valeur débutante en réponse à l'accès de mémoire de cette page, et changée en valeur dans une réorientation progressive de la valeur débutante en réponse à un accès de mémoire a une page à part de la page à laquelle la deuxième entrée se rapporte ;

produisant un code de priorité de page pour la page des premières, deuxièmes et troisièmes entrées ; et

identifiant au moins une page à effacer ayant une priorité la plus haute des codes de priorité de page.

26. La méthode pour le traitement de page selon la revendication 25, pour utiliser avec une deuxième mémoire ayant une plus grande capacité que ladite première mémoire, et comprenant en outre la mémoire virtuelle paginée de demande entre ladite mémoire et ladite deuxième mémoire selon lesdits codes de priorité de page.

27. La méthode pour le traitement de page selon la revendication 25, comprenant en outre le déplacement de la page selon les premières, deuxièmes et troisièmes entrées, à une autre mémoire.

28. La méthode pour le traitement de page selon la revendication 25, comprenant en outre l'exécution d'un fonctionnement cryptographique sur la page selon lesdites premières, deuxièmes et troisièmes entrées.

29. Une unité de télécommunications comprenant
un modem de télécommunications ;
un microprocesseur couplé audit modem de télécommunications ; et **caractérisé par**
le circuit de traitement de page selon les revendications 1 - 24 couplé audit microprocesseur.

FIG. 1

FIG. 2

## FIG. 3

2095 — TRUSTED LIBRARY

USER APPLICATION — 2080

2000

PROTECTED APPLICATION

2020 — FILE SYSTEM

2025 — SECURE STORAGE

2090

SECURE ENV API — 2085

USER MODE

2060

SECURE STATE MACHINE

SECURE ENV DEVICE DRIVER — 2070

KERNEL MODE

2010 — ENCRYPTED SECURE STORAGE

SECURE ROM CODE 2040

SECURE MODE

ROOT PUBLIC KEY

RANDOM KEY

• SW SECURITY POLICY
• CRYPTO LIBRARIES

RNG

SHA-1/MD5

DES/3DES

SDP 1040

SECRET DATA

SECURE RAM

AES

PKA

2050

2045

EP 1 870 813 B1

**2110**

| K | PKA CODE |
| J | PKA CODE |
| I | PKA CODE |
| G | DATA |
| F | |
| E | |
| C | STACK |

**VMC-PA2VA**
**2120**

| | VMC | PG-SLOT | PG STATUS |
|---|---|---|---|
| 1 | 2 | | I |
| 2 | 2 | G | I |
| 3 | 2 | | I |
| 4 | 2 | | I |
| 5 | 2 | C | V |
| 6 | 2 | K | V |
| | 2 | | I |
| | 2 | | I |
| | 2 | | I |
| N | 2 | | I |

SECURE RAM
1034

| 1 | |
| 2 | |
| 3 | |
| 4 | |
| 5 | C |
| 6 | K |

2160

SECURE SWAPPER
DMA FEEDS AES AND SHA

DRAM

| A | B | C⁵ | D | E |
| F | G² | H | I | J |
| | L | K⁶ | | |

1024

SECURE DEMAND
PAGING CODE

2150

| DATA ABORT | MMU | PREFETCH ABORT |

*FIG. 4*

SECURE
RAM — 1034

PAGE₁

PAGE₂

PAGE₃

PAGE₄

PAGE₅

PAGE₆

PAGE₇

PAGE₈

1024

SDRAM

APPLICATION
ENCRYPTED

2200

2250    2240    2230    2220    2210

SECURE
DMA ← AES/3DES ← SECURE
DMA

MATCH? — 2285

2290

SHA1 — 2280

— 2270

SECURE
DMA

2260

*FIG. 5*

SECURE
RAM — 1034

PAGE₁

PAGE₂

PAGE₃

✗ PAGE₄

PAGE₅

PAGE₆

PAGE₇

PAGE₈

1024

SDRAM

APPLICATION
ENCRYPTED

2300

2310    2320    2340

SECURE
DMA → AES/3DES → SECURE
DMA

2330    2350

SHA1 — 2390

2395    2385

SECURE
DMA

2370    — 2360

*FIG. 6*

2415

SECURE RAM

DATA BLOCK
TO ENCRYPT

2460

2410

SYSTEM DMA

2470

AES DES/3DES

2420

HWA

2480

2490

INTERNAL
REGISTERS

2450

RISC IN
SECURE MODE

2425

SECURE
S/W

FLASH/SDRAM

DATA BLOCK
ENCRYPTED

2430

**FIG. 7**

2520

2415

SECURE RAM

DATA BLOCK TO HASH

2560

2410

SYSTEM DMA

INTERNAL
REGISTERS

2570

SHA1/MD5

COMPUTE

RESULT REGISTERS

RISC IN
SECURE MODE

2550

2425

RISC INTERRUPT
HANDLER

2510

IRQ

2590

2580

2595

RISC

**FIG. 8**

45

FIG. 9

*FIG. 10*

PAGE WIPING ADVICE 2880

| 0 | 0 | 0 | 0 | 0 | 0 | 1 | 0 | 0 | ... | 0 |

MUX 2878

2875

N x 9

2860 PRIORITY SORTING PAGE

COLUMNOR

2870 PRIORITY RESULT

RIGHT-MOST "ONE"

ADVICE

CONV TABLE LOOKUP

2855

WR · TYPE · STAT LEVEL · PAGE ACCESS CTR

2850 CONCATENATION CASE TABLE

2845

SECURE RAM VALID PAGE ACT 2890

EMPTY PAGES

WIPE THIS PAGE

LOAD PAGE

PAGE SELECTION LOGIC

2885

FIG. 11

3000

3005 BEGIN

3010 NEW PAGE? — NO

YES

3015 SET CODE/DATA TYPE[N]
RESET COUNTER CTR[N]=127

3020 ANY
PAGE ACCESS
? — NO

YES

3025 ACCESS TO
PAGE [N]? — NO

YES

3040 DECREMENT
COUNTER CTR[N]

3030 RESET CTR[N]=127

3035 UPDATE DIRTY STATUS WR[N]

3050 CONVERT CTR[0,1,...N]
TO USAGE LEVELS

FROM B
FIG. 12B

3060 PAGE FAULT? — YES

A TO
FIG. 12B

NO

TERMINATE? — NO

3095 YES

3098 RETURN

*FIG. 12A*

3000

FROM FIG. 12A

A

3065

EMPTY PAGE? —— YES

NO

3070 — PRIORITIZE, FIND MAX, LOAD WIPING ADVICE ADV

3075 — WIPING PAGE SELECTION

3080

NO — MODIFIED PAGE SELECTED ?

YES

3085 — ENCRYPT, SWAP OUT WIPED PAGE

DRAM

3090 — SWAP IN NEW PAGE

B TO FIG. 12A

1024

*FIG. 12B*

FIG. 13

3200

3205 — ( BEGIN )

3210 — RTL, NETLIST, PLACE/ROUTE PAGE PROCESSING CIRCUIT

3215 — VERIFY

3220 — OK? — NO

YES

3225 — FAB

3230 — SCAN/TEST

3235 — OK? — NO

YES

3240 — PWB

3245 — LOAD PARAMETER(S)

3250 — TEST WIPING EFFICIENCY

3255 — EFFICIENCY MAX? — NO — ADJUST PARAMETER(S) — 3260

YES

3270 — ASSEMBLE TELECOM UNITS

3275 — ( END )

*FIG. 14*

**EP 1 870 813 B1**

**Patent documents cited in the description**

- US 5537571 A
- US 5224217 A
- US 5757919 A
- US 5386546 A